(19) Europäisches Patentamt
European Patent Office
Office européen des brevets

(11) **EP 4 671 072 A1**

(12) **EUROPEAN PATENT APPLICATION**
published in accordance with Art. 153(4) EPC

(43) Date of publication:
**31.12.2025 Bulletin 2026/01**

(21) Application number: **24773880.0**

(22) Date of filing: **29.02.2024**

(51) International Patent Classification (IPC):
**B60W 40/10** (2012.01)

(52) Cooperative Patent Classification (CPC):
**B60R 1/22; B60W 40/10; B60W 40/105;**
**B60W 50/00; B60W 50/14**

(86) International application number:
**PCT/CN2024/079276**

(87) International publication number:
**WO 2024/193312 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 CN 202310304552**

(71) Applicant: **Shenzhen Yinwang Intelligent
Technologies Co., Ltd.
Shenzhen, Guangdong 518110 (CN)**

(72) Inventors:
• **WANG, Bingxue
Shenzhen, Guangdong 518129 (CN)**
• **LIU, Xuyang
Shenzhen, Guangdong 518129 (CN)**

(74) Representative: **Maiwald GmbH
Engineering
Elisenhof
Elisenstrasse 3
80335 München (DE)**

(54) **INTELLIGENT DRIVING METHOD AND RELATED PRODUCT**

(57) An intelligent driving method and a related product are provided, and relate to the field of intelligent vehicle technologies. The method includes: determining a detection field of view; determining whether the detection field of view satisfies a requirement of a first driving decision, wherein the first driving decision is a driving decision that an intelligent driving apparatus or a driver expects to execute, or the first driving decision is a driving decision currently executed by an intelligent driving apparatus; and when the detection field of view does not satisfy the requirement of the first driving decision, controlling the intelligent driving apparatus to execute a second driving decision to expand the detection field of view, so that the detection field of view can be expanded in time, to help execute the first driving decision; or controlling the intelligent driving apparatus to execute a second driving decision to reduce a speed of the intelligent driving apparatus, thereby improving traveling safety.

601
An intelligent driving apparatus determines a detection field of view

602
Determine whether the detection field of view satisfies a requirement of a first driving decision — Yes

No

603
Control the intelligent driving apparatus to execute a second driving decision to expand the detection field of view, or control the intelligent driving apparatus to execute a second driving decision to reduce a speed of the intelligent driving apparatus

604
When the requirement of the first driving decision is satisfied after the detection field of view is expanded, control the intelligent driving apparatus to execute the first driving decision

605
Control the intelligent driving apparatus to execute the first driving decision

FIG. 6

## Description

This application claims priority to Chinese Patent Application No. 202310304552.0, filed with the China National Intellectual Property Administration on March 17, 2023, and entitled "INTELLIGENT DRIVING METHOD AND RELATED PRODUCT", which is incorporated herein by reference in its entirety.

## TECHNICAL FIELD

This application relates to the field of intelligent vehicle technologies, and in particular, to an intelligent driving method and a related product.

## BACKGROUND

During traveling of a vehicle, both a driver and a sensor on the vehicle may have a blind spot. There may be various sources of the blind spot. For example, the blind spot is generated when fields of view of both the driver and the sensor (for example, a camera, a lidar, or a millimeter-wave radar) on the vehicle are blocked by a surrounding vehicle, a road edge, an obstacle, or a wall. Sizes and positions of blind spots in different driving scenarios are usually different.

In pratical application, when a blind spot of a sensor in a key field of view is excessively large, a decision-making and planning effect of intelligent driving is severely affected. When a blind spot of a sensor on a vehicle in a key field of view for sensing is excessively large, the following problems may occur: ① Running-red-light occurs at an intersection because a traffic light cannot be seen due to blocking. (2) A wrong lane change occurs because a visible distance in a target lane is limited due to blocking. ③ A collision risk is caused by "sudden intrusion" of a pedestrian at an opening. Therefore, a control method for coping with field of view blocking needs to be studied, to improve traveling safety of the vehicle.

## SUMMARY

Embodiments of this application disclose an intelligent driving method and a related product, to improve traveling safety of a vehicle and improve intelligence of an intelligent vehicle system.

According to a first aspect, an embodiment of this application provides an intelligent driving method, applied to an intelligent driving apparatus. The method includes: determining a detection field of view; determining whether the detection field of view satisfies a requirement of a first driving decision, where the first driving decision is a driving decision that the intelligent driving apparatus or a driver expects to execute, or the first driving decision is a driving decision currently executed by the intelligent driving apparatus; and when the detection field of view does not satisfy the requirement of the first driving decision, controlling the intelligent driving apparatus to execute a second driving decision to expand the detection field of view, or controlling the intelligent driving apparatus to execute a second driving decision to reduce a speed of the intelligent driving apparatus. The method in the first aspect may be performed by the intelligent driving apparatus, may be performed by a processor like a domain controller, a mobile data center (MDC), or a vehicle-mounted computer on the intelligent driving apparatus, or may be performed by a conventional chip like a central processing unit (CPU) or a micro control unit (MCU).

In this embodiment of this application, when the detection field of view does not satisfy the requirement of the first driving decision, the intelligent driving apparatus is controlled to execute the second driving decision to expand the detection field of view, so that the detection field of view can be expanded in time, to help execute the first driving decision. When the detection field of view does not satisfy the requirement of the first driving decision, the intelligent driving apparatus is controlled to execute the second driving decision to reduce the speed of the intelligent driving apparatus, so that traveling safety can be improved.

In a possible implementation, when the first driving decision is a lane change, lane borrowing, or overtaking that the intelligent driving apparatus or the driver expects to execute, the second driving decision is a lateral offset.

In this implementation, the intelligent driving apparatus is controlled to execute the second driving decision to expand the detection field of view, so that an expanded detection field of view satisfies the requirement of the first driving decision.

In a possible implementation, that the detection field of view does not satisfy the requirement of the first driving decision is specifically as follows: A proportion of a blocked field of view for a target lane exceeds a first threshold, where the target lane is a lane to which the intelligent driving apparatus needs to change or a lane that the intelligent driving apparatus needs to borrow when the intelligent driving apparatus executes the first driving decision.

In this implementation, that the detection field of view does not satisfy the requirement of the first driving decision is specifically as follows: The proportion of the blocked field of view for the target lane exceeds the first threshold; and it may be determined whether the lane to be changed or the lane to be borrowed when the first driving decision is executed satisfies the requirement of the first driving decision.

In a possible implementation, when the first driving decision is a driving decision for passing a front intersection that the intelligent driving apparatus or the driver expects to execute, the second driving decision is a lateral offset.

In this implementation, the intelligent driving apparatus is controlled to execute the second driving decision to expand the detection field of view, so that an expanded detection field of view satisfies the requirement of the first driving decision.

In a possible implementation, that the detection field of view does not satisfy the requirement of the first driving decision is specifically as follows: A field of view for a traffic light at the front intersection is blocked or a proportion of a blocked forward field of view of the intelligent driving apparatus exceeds a second threshold.

In this implementation, whether the detection field of view satisfies the driving decision for passing through the front intersection can be accurately determined.

In a possible implementation, before controlling the intelligent driving apparatus to execute the second driving decision to expand the detection field of view, the method further includes: determining that the intelligent driving apparatus satisfies a lateral offset condition in a current traveling scenario.

In this implementation, before the intelligent driving apparatus is controlled to execute the second driving decision to expand the detection field of view, it is determined that the intelligent driving apparatus satisfies the lateral offset condition in the current traveling scenario, so that safety of executing the second driving decision by the intelligent driving apparatus can be improved.

In a possible implementation, when the first driving decision is a driving decision for traveling in a current traveling lane that is currently executed by the intelligent driving apparatus, the second driving decision is a lane change, lane borrowing, or a lateral offset.

In this implementation, the intelligent driving apparatus is controlled to execute the second driving decision to expand the detection field of view, so that the detection field of view can be expanded, to help make a more appropriate driving decision based on an expanded detection field of view.

In a possible implementation, before controlling the intelligent driving apparatus to execute the second driving decision to expand the detection field of view, the method further includes: determining that the intelligent driving apparatus currently satisfies a lane change condition, a lane borrowing condition, or a lateral offset condition.

In this implementation, before the intelligent driving apparatus is controlled to execute the second driving decision to expand the detection field of view, it is determined that the intelligent driving apparatus currently satisfies the lane change condition, the lane borrowing condition, or the lateral offset condition, so that safety of executing the second driving decision by the intelligent driving apparatus can be improved.

In a possible implementation, before controlling the intelligent driving apparatus to execute the second driving decision to expand the detection field of view, the method further includes: outputting first prompt information, where the first prompt information is used to inform the driver whether to agree to execute a driving decision for the lane change, lane borrowing, or lateral offset.

In this implementation, the first prompt information is output, so that the driver better understands driving behavior of the intelligent driving apparatus.

In a possible implementation, when the first driving decision is a driving decision for traveling at a first speed in a current traveling lane that is currently executed by the intelligent driving apparatus, the second driving decision is a driving decision for traveling at a second speed in the current traveling lane, and the second speed is lower than the first speed.

In this implementation, when the detection field of view does not satisfy the requirement of the first driving decision, the intelligent driving apparatus is controlled to travel at the second speed in the current traveling lane, that is, reduce the traveling speed, so that traveling safety can be improved.

In a possible implementation, that the detection field of view does not satisfy the requirement of the first driving decision is specifically as follows: A proportion of a blocked lateral field of view of the intelligent driving apparatus exceeds a third threshold.

In this implementation, when the proportion of the blocked lateral field of view of the intelligent driving apparatus exceeds the third threshold, the intelligent driving apparatus is controlled to travel at the second speed in the current traveling lane, that is, reduce the traveling speed, so that traveling safety can be improved.

In a possible implementation, before controlling the intelligent driving apparatus to execute the second driving decision to reduce the speed of the intelligent driving apparatus, the method further includes: outputting second prompt information, where the second prompt information is used to inform the driver that the intelligent driving apparatus is to be controlled to decelerate.

In this implementation, the second prompt information is output, so that the driver better understands the driving behavior of the intelligent driving apparatus.

In a possible implementation, before controlling the intelligent driving apparatus to execute the second driving decision, the method further includes: outputting a function enabling request, where the function enabling request is used to request to enable a function of controlling the intelligent driving apparatus to execute the second driving decision.

In this implementation, the function enabling request is output, to request the driver to agree to enable the function of controlling the intelligent driving apparatus to execute the second driving decision.

In a possible implementation, after controlling the intelligent driving apparatus to execute the second driving decision, the method further includes: outputting exploration process information to a display apparatus, where the exploration process information is used by the display apparatus to display a process of expanding the detection field of view.

In this implementation, the intelligent driving apparatus outputs the exploration process information through the display apparatus, so that the driver learns of an active exploration process.

In a possible implementation, the method further includes: outputting field of view blocking information to the display apparatus, where the field of view blocking information is used by the display apparatus to display a position and a blocking proportion of a field of view blocking region of the intelligent driving apparatus.

In this implementation, the intelligent driving apparatus outputs the field of view blocking information through the display apparatus, so that the driver more intuitively learns of the position and the blocking proportion of the field of view blocking region of the intelligent driving apparatus.

In a possible implementation, the method further includes: when the detection field of view satisfies the requirement of the first driving decision, controlling the intelligent driving apparatus to execute the first driving decision.

In this implementation, safety of controlling the intelligent driving apparatus to execute the first driving decision can be ensured.

In a possible implementation, the method further includes: when the requirement of the first driving decision is satisfied after the detection field of view is expanded, controlling the intelligent driving apparatus to execute the first driving decision.

In this implementation, safety of controlling the intelligent driving apparatus to execute the first driving decision can be ensured.

In a possible implementation, the method further includes: when the requirement of the first driving decision is not satisfied after the detection field of view is expanded, controlling the intelligent driving apparatus to execute a third driving decision to offset toward a center of the current traveling lane.

In this implementation, safety of the intelligent driving apparatus during traveling can be improved.

In a possible implementation, before determining whether the detection field of view satisfies the requirement of the first driving decision, the method further includes: determining that a current driving scenario of the intelligent driving apparatus is an active exploration scenario. It may be understood that, when the current driving scenario of the intelligent driving apparatus is an active exploration scenario, whether the detection field of view satisfies the requirement of the first driving decision is determined; or when the current driving scenario of the intelligent driving apparatus is not the active exploration scenario, whether the detection field of view satisfies the requirement of the first driving decision does not need to be determined.

In this implementation, it is determined that the current driving scenario is the active exploration scenario, so that an unnecessary operation of determining whether the detection field of view satisfies a requirement of a driving decision can be avoided, to reduce power consumption.

According to a second aspect, an embodiment of this application provides an intelligent driving apparatus. The intelligent driving apparatus has a function of implementing behavior in the method embodiment in the first aspect. The intelligent driving apparatus may be an intelligent vehicle (an entire vehicle), may be a component (for example, a processor, a chip, or a chip system) of the intelligent vehicle, or may be a logic module or software that can implement all or a part of functions of the intelligent driving apparatus. The functions of the intelligent driving apparatus may be implemented by hardware, or may be implemented by hardware executing corresponding software. The hardware or the software includes one or more modules or units corresponding to the foregoing functions. In a possible implementation, the intelligent driving apparatus includes a field of view blocking detection module and an active exploration decision-making module. The field of view blocking detection module is configured to determine a detection field of view. The active exploration decision-making module is configured to determine whether the detection field of view satisfies a requirement of a first driving decision, where the first driving decision is a driving decision that the intelligent driving apparatus or a driver expects to execute, or the first driving decision is a driving decision currently executed by the intelligent driving apparatus. The active exploration decision-making module is further configured to: when the detection field of view does not satisfy the requirement of the first driving decision, control the intelligent driving apparatus to execute a second driving decision to expand the detection field of view, or control the intelligent driving apparatus to execute a second driving decision to reduce a speed of the intelligent driving apparatus.

In a possible implementation, when the first driving decision is a lane change, lane borrowing, or overtaking that the intelligent driving apparatus or the driver expects to execute, the second driving decision is a lateral offset.

In a possible implementation, that the detection field of view does not satisfy the requirement of the first driving decision is specifically as follows: A proportion of a blocked field of view for a target lane exceeds a first threshold, where the target lane is a lane to which the intelligent driving apparatus needs to change or a lane that the intelligent driving apparatus needs to borrow when the intelligent driving apparatus executes the first driving decision.

In a possible implementation, when the first driving decision is a driving decision for passing a front intersection that the intelligent driving apparatus or the driver expects to execute, the second driving decision is a lateral offset.

In a possible implementation, that the detection field of view does not satisfy the requirement of the first driving decision is specifically as follows: A field of view for a traffic light at the front intersection is blocked or a proportion of a blocked forward field of view of the intelligent driving apparatus exceeds a second threshold.

In a possible implementation, the active exploration decision-making module is further configured to determine that the intelligent driving apparatus satisfies a lateral offset condition in a current traveling scenario.

In a possible implementation, when the first driving decision is a driving decision for traveling in a current traveling lane that is currently executed by the intelligent driving apparatus, the second driving decision is a lane change, lane borrowing, or a lateral offset.

In a possible implementation, the active exploration decision-making module is further configured to determine that the intelligent driving apparatus currently satisfies a lane change condition, a lane borrowing condition, or a lateral offset condition.

In a possible implementation, the active exploration decision-making module is further configured to output first prompt information, where the first prompt information is used to inform the driver whether to agree to execute a driving decision for the lane change, lane borrowing, or lateral offset.

In a possible implementation, when the first driving decision is a driving decision for traveling at a first speed in a current traveling lane that is currently executed by the intelligent driving apparatus, the second driving decision is a driving decision for traveling at a second speed in the current traveling lane, and the second speed is lower than the first speed.

In a possible implementation, that the detection field of view does not satisfy the requirement of the first driving decision is specifically as follows: A proportion of a blocked lateral field of view of the intelligent driving apparatus exceeds a third threshold.

In a possible implementation, the active exploration decision-making module is further configured to output second prompt information, where the second prompt information is used to inform the driver that the intelligent driving apparatus is to be controlled to decelerate.

In a possible implementation, the active exploration decision-making module is further configured to output a function enabling request, where the function enabling request is used to request to enable a function of controlling the intelligent driving apparatus to execute the second driving decision.

In a possible implementation, the active exploration decision-making module is further configured to output exploration process information to a display apparatus, where the exploration process information is used by the display apparatus to display a process of expanding the detection field of view.

In a possible implementation, the active exploration decision-making module is further configured to output field of view blocking information to the display apparatus, where the field of view blocking information is used by the display apparatus to display a position and a blocking proportion of a field of view blocking region of the intelligent driving apparatus.

In a possible implementation, the active exploration decision-making module is further configured to: when the detection field of view satisfies the requirement of the first driving decision, control the intelligent driving apparatus to execute the first driving decision.

In a possible implementation, the active exploration decision-making module is further configured to: when the requirement of the first driving decision is satisfied after the detection field of view is expanded, control the intelligent driving apparatus to execute the first driving decision.

In a possible implementation, the active exploration decision-making module is further configured to: when the requirement of the first driving decision is not satisfied after the detection field of view is expanded, control the intelligent driving apparatus to execute a third driving decision to offset toward a center of the current traveling lane.

In a possible implementation, the intelligent driving apparatus further includes a driving scenario analysis module, configured to determine that a current driving scenario of the intelligent driving apparatus is an active exploration scenario.

For technical effects brought by the possible implementations of the second aspect, refer to descriptions of technical effects of the first aspect or the possible implementations of the first aspect.

According to a third aspect, an embodiment of this application provides another intelligent driving apparatus. The intelligent driving apparatus includes a processor. The processor is coupled to a memory, and the memory is configured to store a program or instructions. When the program or the instructions are executed by the processor, the intelligent driving apparatus is enabled to perform the method according to any one of the first aspect or the possible implementations of the first aspect.

According to a fourth aspect, this application provides another intelligent driving apparatus. The intelligent driving apparatus includes a processing circuit and an interface circuit. The interface circuit is configured to obtain data or output data. The processing circuit is configured to perform the method according to any one of the first aspect or the possible implementations of the first aspect.

According to a fifth aspect, this application provides a computer-readable storage medium. The computer-readable storage medium stores a computer program, and the computer program includes program instructions. When the program instructions are executed, a computer is enabled to perform the method according to any one of the first aspect or the possible implementations of the first aspect.

According to a sixth aspect, this application provides a computer program product. The computer program product includes a computer program, and the computer program includes program instructions. When the program instructions are executed, a computer is enabled to perform the method according to any one of the first aspect or the possible implementations of the first aspect.

According to a seventh aspect, this application provides a chip, including a processor and a communication interface. The processor reads, through the communication interface, instructions stored in a memory, to perform the method according to any one of the first aspect or the possible implementations of the first aspect.

## BRIEF DESCRIPTION OF DRAWINGS

To describe the technical solutions in embodiments of this application or in the background more clearly, the following describes the accompanying drawings for describing embodiments of this application or the background.

FIG. 1 shows an example in which an intelligent driving apparatus performs active exploration in an AEA mode according to an embodiment of this application;

FIG. 2 is a diagram of a process of "making a decision while exploring" of active exploration according to an embodiment of this application;

FIG. 3 is a diagram of an architecture of an active exploration system according to an embodiment of this application;

FIG. 4 shows an example in which a front visible region of an intelligent driving apparatus is blocked according to an embodiment of this application;

FIG. 5 shows an example in which an active exploration decision-making module determines whether and how to perform active exploration according to an embodiment of this application;

FIG. 6 is a flowchart of an intelligent driving method according to an embodiment of this application;

FIG. 7 shows an example of a "sudden intrusion" scenario according to an embodiment of this application;

FIG. 8 is a flowchart of another intelligent driving method according to an embodiment of this application;

FIG. 9 shows an example of outputting a function enabling request on a human-machine interface;

FIG. 10 shows an example of an active exploration setting interface according to an embodiment of this application;

FIG. 11 is a flowchart of another intelligent driving method according to an embodiment of this application;

FIG. 12A is a diagram of creep exploration;

FIG. 12B is a diagram of traveling exploration;

FIG. 13 is a flowchart of another intelligent driving method according to an embodiment of this application;

FIG. 14 is a diagram in which a vehicle in front of an intelligent driving apparatus blocks a traffic light;

FIG. 15 is a flowchart of another intelligent driving method according to an embodiment of this application;

FIG. 16 is a diagram of lateral avoidance to reduce field of view blocking according to an embodiment of this application; and

FIG. 17 is a diagram of a structure of another intelligent driving apparatus 200 according to an embodiment of this application.

## DESCRIPTION OF EMBODIMENTS

Terms "first", "second", and the like in the specification, claims, and accompanying drawings of this application are merely used to distinguish between different objects, and are not used to describe a specific sequence. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described with reference to embodiments may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that embodiments described in this specification may be combined with other embodiments.

Terms used in the following embodiments of this application are merely intended to describe specific embodiments, but are not intended to limit this application. As used in the specification of this application and the appended claims, a singular expression "a", "an", "the", "the foregoing", "such a", or "this" is also intended to include a plural expression unless otherwise clearly indicated in the context. It should also be understood that, the term "and/or" used in this application indicates and includes any or all possible combinations of one or more of the listed items. For example, "A and/or B" may represent three cases: Only A exists, only B exists, and both A and B exist, where A and B may be singular or plural. The term "a plurality of" used in this application means two or more. In text descriptions of this application, a character "/" usually indicates an "or" relationship between associated objects. The term "at least one" used in this application means one or more.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

An intelligent driving apparatus sometimes has a blind spot during traveling. When the blind spot is excessively large, the intelligent driving apparatus or a driver may not make a safe driving decision that complies with a traffic rule. To resolve this problem, embodiments of this application provide an intelligent driving method, so that an intelligent driving apparatus or a driver makes a safe driving decision that complies with a traffic rule. An active exploration system needs to be deployed for the intelligent driving apparatus to perform the intelligent driving method provided in embodiments of this application. The active exploration system may be a part of an intelligent driving system of the intelligent driving apparatus. In other words, the intelligent driving system of the intelligent driving apparatus may implement a function of the active exploration system. When running the active exploration system, the intelligent driving apparatus enters an active exploration assist (AEA) mode. The intelligent driving apparatus may enter the AEA mode from a routine intelligent driving mode or a human driving mode (namely, a driver driving mode). In the AEA mode, the intelligent driving apparatus may analyze a driving scenario of the intelligent driving apparatus and detect a blocking status of a detection field of view of the intelligent driving apparatus. After enabling an active exploration function in the AEA mode, the intelligent driving apparatus may perform active exploration, to be specific, actively execute a second driving decision to expand the detection field of view or reduce a speed of the intelligent driving apparatus.

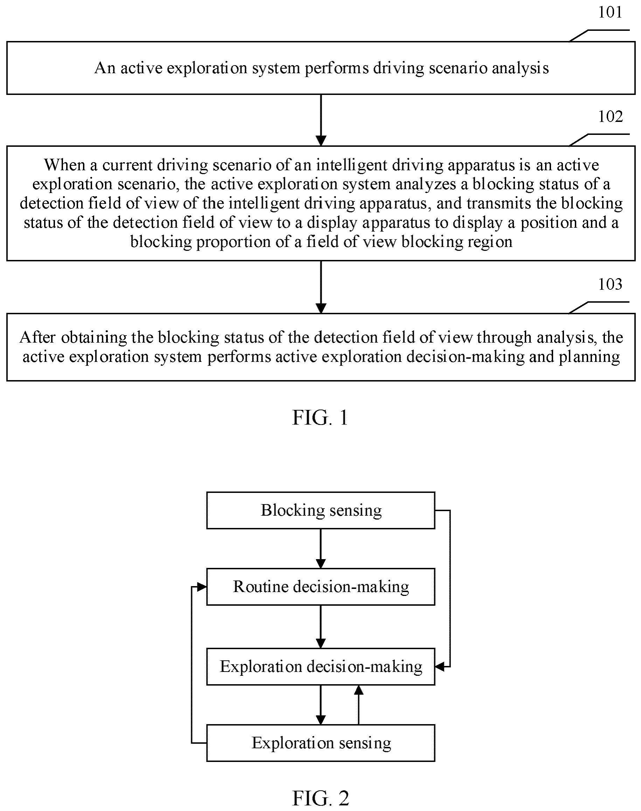

FIG. 1 shows an example in which an intelligent driving apparatus performs active exploration in an AEA mode according to an embodiment of this application. As shown in FIG. 1, when the intelligent driving apparatus performs active exploration in the AEA mode, the following operations may be performed.

101: An active exploration system performs driving scenario analysis, to be specific, determines whether a current driving scenario of the intelligent driving apparatus is an active exploration scenario. Determining whether the current driving scenario of the intelligent driving apparatus is an active exploration scenario is specifically as follows: determining whether the current driving scenario of the intelligent driving apparatus is any driving scenario in a target scenario set, where the target scenario set may include the following Scenario 1, Scenario 2, Scenario 3, and other driving scenarios. It may be understood that all driving scenarios in the target scenario set are active exploration scenarios. The active exploration scenario may be understood as a scenario in which an active exploration function of the intelligent driving apparatus is allowed to be triggered. In actual application, the target scenario set may be set or adjusted, to be specific, specific driving scenarios that are active exploration scenarios are set.

For example, when a current driving scenario of the intelligent driving apparatus is the following Scenario 1, Scenario 2, or Scenario 3, the current driving scenario of the intelligent driving apparatus is an active exploration scenario.

102: When the current driving scenario of the intelligent driving apparatus is an active exploration scenario, the active exploration system analyzes a blocking status of a detection field of view of the intelligent driving apparatus (that is, performs field of view blocking detection), and transmits the blocking status of the detection field of view to a display apparatus to display a position and a blocking proportion of a field of view blocking region. The display apparatus may be a central display of the intelligent driving apparatus.

103: After obtaining the blocking status of the detection field of view through analyzing, the active exploration system performs active exploration decision-making and planning. That the active exploration system performs active exploration decision-making and planning may include the following: determining whether the intelligent driving apparatus can perform active exploration; and when it is determined that the intelligent driving apparatus can perform active exploration, requesting a driver to confirm whether to enable the active exploration function. Determining whether the intelligent driving apparatus can perform active exploration is specifically as follows: determining whether the intelligent driving apparatus currently satisfies an active exploration condition. When the intelligent driving apparatus currently satisfies the active exploration condition, the intelligent driving apparatus can perform active exploration. When the intelligent driving apparatus currently does not satisfy the active exploration condition, the intelligent driving apparatus cannot perform active exploration. For example, the active exploration system determines, based on the blocking status of the detection field of view and a size of a passable region of the intelligent driving apparatus, whether the intelligent driving apparatus currently satisfies (or meets) the active exploration condition. After the driver confirms to enable the active exploration function, the active exploration system enables the active exploration function. Before the driver confirms to enable the active exploration function, the active exploration system does not enable the active exploration function. After the driver confirms not to enable the active exploration function, the active exploration system may enter an intelligent driving mode or a human driving mode from the AEA mode. After the active exploration function is enabled, in other words, in a process in which the intelligent driving apparatus performs active exploration, the active exploration system outputs exploration process information to the display apparatus, to display an active exploration process in real time and provide a detection field of view expanding status. The active exploration system may make a driving decision based on an active exploration result. For example, when an expanded detection field of view (namely, the active exploration result) of the intelligent driving apparatus satisfies a requirement of a first driving decision that the intelligent driving apparatus or the driver expects to execute, the active exploration system executes the first driving decision. For another example, when an expanded detection field of view of the intelligent driving apparatus does not satisfy a requirement of a first driving decision that the intelligent driving apparatus or the driver expects to execute, the active exploration system executes an exploration return function, for example, executes a third driving decision to offset toward a lane center or return to a position before exploration.

It should be noted that, the active exploration system provided in this application is a closed-loop architecture that combines the blocking status of the detection field of view and decision-making and planning, and can achieve an anthropomorphic effect of "making a decision while exploring". FIG. 2 is a diagram of a process of "making a decision while exploring" of active exploration according to an embodiment of this application. It can be learned from FIG. 2 that, the active exploration system determines, based on routine decision-making (namely, decision-making in the intelligent driving mode), whether the detection field of view satisfies the requirement of the first driving decision. The first driving decision is a driving decision that the intelligent driving apparatus or the driver expects to execute. Alternatively, the first driving decision is a driving decision currently executed by the intelligent driving apparatus. When the detection field of view does not satisfy the requirement of the first driving decision, the active exploration system controls the intelligent driving apparatus to perform exploration decision-making, that is, perform active exploration. When performing active exploration, the intelligent driving apparatus performs sensing while exploring, and determines whether the detection field of view that satisfies the requirement of the first driving decision is detected. A condition for ending active exploration by the active exploration system, namely, an exploration end condition, is determined based on whether the detection field of view that satisfies the requirement of the first driving decision is detected, and active exploration rollback, that is, returning to an original path, is supported. After active exploration is completed, a condition is created for routine decision-making, so that routine decision-making implements status transition, and safety and efficiency are improved.

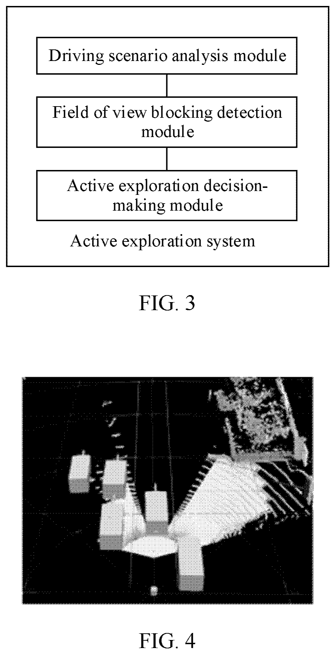

FIG. 3 is a diagram of an architecture of an active exploration system according to an embodiment of this application. As shown in FIG. 3, the active exploration system includes a driving scenario analysis module, a field of view blocking detection module, and an active exploration decision-making module. FIG. 3 may be considered as a diagram of a structure of an intelligent driving apparatus. A function of the active exploration system may be implemented by hardware, or may be implemented by hardware executing corresponding software. The driving scenario analysis module is configured to analyze a driving scenario of the intelligent driving apparatus, that is, perform driving scenario analysis. The field of view blocking detection module is configured to: quantify and visualize a degree to which a detection field of view of the intelligent driving apparatus is blocked, and transmit a field of view status (including a position and a blocking proportion of a field of view blocking region) to the active exploration decision-making module and a display apparatus. The active exploration decision-making module is configured to determine whether and how to control the intelligent driving apparatus to perform active exploration. The following further describes the modules in the active exploration system.

Driving scenario analysis module:

The driving scenario analysis module may be configured to perform scenario identification (or driving scenario analysis) based on information such as sensing information, positioning information, and an electronic map of the intelligent driving apparatus. When a scenario feature identified by the driving scenario analysis module satisfies the following typical scenario or another similar scenario, a scenario identification result is transferred to the active exploration decision-making module.

Scenario 1: During traveling of the intelligent driving apparatus, the intelligent driving apparatus slows down because there is a slow or stationary obstacle in front of the intelligent driving apparatus, or the intelligent driving apparatus is close to a front vehicle after the intelligent driving apparatus stops. As a result, a visible region in front of, on a side of, or behind the intelligent driving apparatus is greatly blocked.

Scenario 2: When there is an intersection with a traffic light or a road with another key sign in front of the intelligent driving apparatus, a front vehicle blocks detection performed by the intelligent driving apparatus on the traffic light/sign, that is, a visible region for the traffic light/sign is blocked.

Scenario 3: There is an intersection, an opening, a gap between vehicles, or the like that is in front of the intelligent driving apparatus and at which "sudden intrusion" may occur, and the intelligent driving apparatus cannot detect whether there is a risk target. Risk targets include pedestrians, electric bikes, bicycles, and automobiles.

It may be understood that the foregoing three scenarios are merely a part of examples. In actual application, a scenario identified by the driving scenario analysis module may be configured or adjusted based on an actual requirement, instead of being limited to the foregoing three scenarios.

Field of view blocking detection module:

The field of view blocking detection module is configured to quantify and visualize the degree to which the detection field of view of the intelligent driving apparatus is blocked. Although different sensors have different mounting positions, different detection principles, different fusion solutions, and different maximum ranges of sensing regions, a blocking status of the detection field of view may be uniformly expressed based on a horizontal field of view (H-FOV) and a vertical field of view (V-FOV). The sensor may report the blocking status in real time based on a processing result of a sensing algorithm (point cloud and ID tracking). In addition, the intelligent driving apparatus may classify different regions of interest (ROIs) based on a driving decision that the intelligent driving apparatus expects to execute or currently executed by the intelligent driving apparatus, and determine a proportion of a blocked region in the ROI. In addition, the information may be transmitted to the display apparatus (for example, a central display of the intelligent driving apparatus) for display. Blocking detection of the detection field of view (which may be referred to as a sensing field of view) can assist in intelligent decision-making and planning in real time, and also provide important input information for the intelligent driving apparatus to perform active exploration.

Based on different sensor configurations (types and mounting positions) and fusion solutions, the field of view blocking detection module is configured to calculate a size of a blocked region based on relationships between H-FOVs and V-FOVs of different sensors and a target. The target refers to a vehicle, a bicycle, a pedestrian, or the like on a lane. Because of a feature of a millimeter-wave radar, a target in the blocked region can also be detected to an extent, but a confidence level is reduced. The field of view blocking detection module may transmit an entire detection range, a detected range, and a blocked detection range of a vehicle-mounted sensor to the display apparatus for display. The detected range is a detection field of view. The blocked detection range is a blocked region in the entire detection range of the vehicle-mounted sensor. FIG. 4 shows an example in which a front visible region of an intelligent driving apparatus is blocked according to an embodiment of this application. FIG. 4 shows a case in which the front visible region of the intelligent driving apparatus is blocked. A black region is a blocked region, and a white region is a detection field of view of the intelligent driving apparatus.

Active exploration decision-making module:

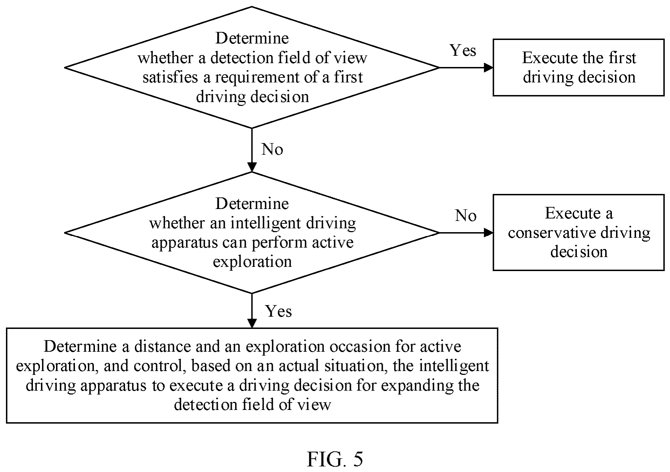

The active exploration decision-making module may be configured to combine an intelligent driving function with field of view blocking detection, to determine whether and how to perform active exploration. FIG. 5 shows an example in which an active exploration decision-making module determines whether and how to perform active exploration according to an embodiment of this application. As shown in FIG. 5, the active exploration decision-making module may perform the following procedure: determining whether the detection field of view satisfies a requirement of a first driving decision, where the first driving decision is a driving decision that the intelligent driving apparatus or a driver expects to execute, or the first driving decision is a driving decision currently executed by the intelligent driving apparatus; executing the first driving decision when the detection field of view satisfies the requirement of the first driving decision; determining, when the detection field of view does not satisfy the requirement of the first driving decision, whether the intelligent driving apparatus can perform active exploration; when it is determined that the intelligent driving apparatus can perform active exploration, determining a distance and an exploration occasion for active exploration, and controlling, based on an actual situation, the intelligent driving apparatus to execute a driving decision for expanding the detection field of view; and when it is determined that the intelligent driving apparatus cannot perform active exploration, controlling the intelligent driving apparatus to execute a conservative driving decision, where the conservative driving decision may be following a vehicle or decelerating in a current lane. The driving decision for expanding the detection field of view includes lane borrowing, a lane change, a lateral offset, and the like. The distance for active exploration is a lateral offset distance of the intelligent driving apparatus. The active exploration decision-making module may dynamically adjust the distance for active exploration based on a current field of view blocking status and prediction of a movement trajectory of a surrounding target.

The following describes the intelligent driving method provided in embodiments of this application with reference to the accompanying drawings.

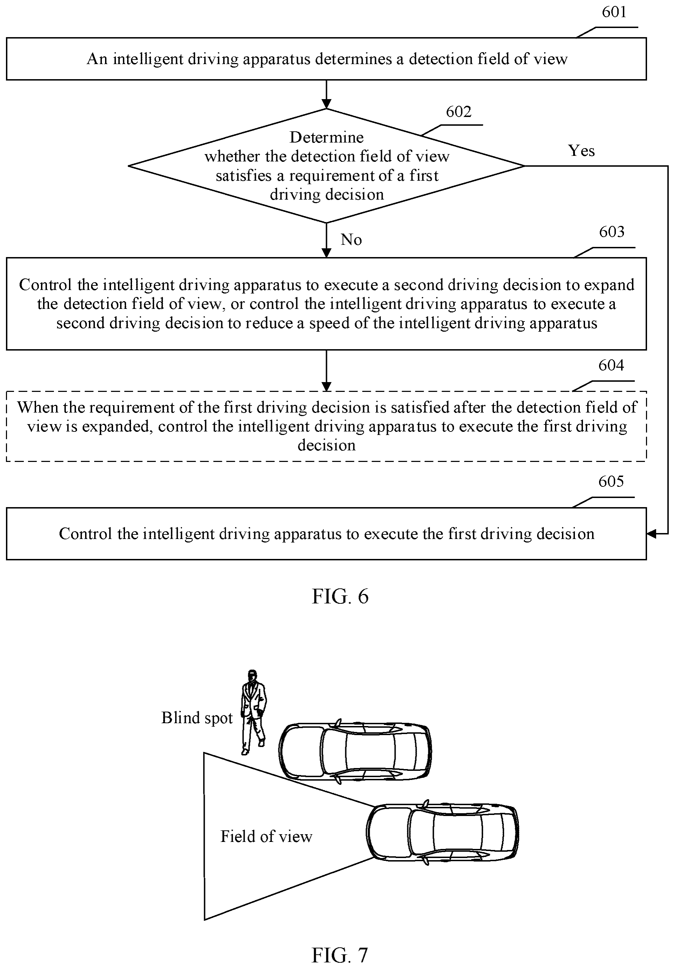

FIG. 6 is a flowchart of an intelligent driving method according to an embodiment of this application. As shown in FIG. 6, the method includes the following steps.

601: An intelligent driving apparatus determines a detection field of view.

A sensor (or a detection apparatus) like a lidar, a millimeter-wave radar, or a camera deployed on the intelligent driving apparatus may detect or sense a field of view around the intelligent driving apparatus, that is, detect a stationary target and/or a mobile target around the intelligent driving apparatus. The intelligent driving apparatus may determine the detection field of view by fusing detection results of a plurality of sensors deployed on the intelligent driving apparatus to obtain the detection field of view, or by using a detection result of one sensor as the detection field of view. The detection field of view may be understood as a region, namely, a detection range, that can be detected by the sensor deployed on the intelligent driving apparatus. The detection field of view may reflect a stationary target and a mobile target in the region. In this application, an operation performed by the intelligent driving apparatus may be an operation performed by the foregoing active exploration system. In other words, an operation performed by the intelligent driving apparatus may be an operation performed by an MDC of the intelligent driving apparatus.

602: The intelligent driving apparatus determines whether the detection field of view satisfies a requirement of a first driving decision.

The first driving decision is a driving decision that the intelligent driving apparatus or a driver expects to execute. Alternatively, the first driving decision is a driving decision currently executed by the intelligent driving apparatus.

In a possible implementation, the first driving decision is a driving decision for a lane change, lane borrowing, or overtaking that the intelligent driving apparatus or the driver expects to execute, and determining whether the detection field of view satisfies the requirement of the first driving decision is specifically as follows: determining whether a proportion of a blocked field of view for a target lane exceeds a first threshold. The first threshold may be 0.2, 0.3, 0.4, 0.5, or the like. This is not limited in embodiments of this application. The target lane is a lane to which the intelligent driving apparatus needs to change or a lane that the intelligent driving apparatus needs to borrow when the intelligent driving apparatus executes the first driving decision. The target lane is an adjacent lane of a current traveling lane of the intelligent driving apparatus. The proportion of the blocked field of view for the target lane is a proportion of an area of a blocked region in an ROI of the target lane. The ROI of the target lane may be an ROI obtained through division by the intelligent driving apparatus based on the first driving decision that the intelligent driving apparatus expects to execute, namely, a region that the intelligent driving apparatus needs to sense when changing from a lane in which the intelligent driving apparatus travels to the target lane. The region changes correspondingly as the intelligent driving apparatus moves. For example, the ROI of the target lane is a rectangular region in the target lane whose length is a first length (for example, 100 m, 150 me, or 200 m) and whose center line is the same as a center line of the intelligent driving apparatus. In actual application, the ROI of the target lane may be set or adjusted based on an actual requirement.

In a possible implementation, the first driving decision is a driving decision for passing a front intersection that the intelligent driving apparatus or the driver expects to execute, and determining whether the detection field of view satisfies the requirement of the first driving decision is specifically as follows: determining whether a field of view for a traffic light (or another sign) at the front intersection is blocked, or determining whether a proportion of a blocked forward field of view of the intelligent driving apparatus exceeds a second threshold. That the field of view for the traffic light at the front intersection is blocked may be understood as that the intelligent driving apparatus fails to detect the traffic light at the front intersection, in other words, the detection field of view does not include a visible region for the traffic light. The second threshold may be 0.3, 0.4, 0.5, 0.6, or the like. This is not limited in embodiments of this application. The proportion of the blocked forward field of view of the intelligent driving apparatus may be a proportion of an area of a blocked region in an ROI of the forward field of view of the intelligent driving apparatus. The ROI of the forward field of view of the intelligent driving apparatus may be a pre-divided region, and the region changes correspondingly as the intelligent driving apparatus moves. For example, a region in a first H-FOV and a first V-FOV in front of the intelligent driving apparatus is the ROI of the forward field of view of the intelligent driving apparatus, where the first H-FOV is 120 degrees, 130 degrees, 135 degrees, 140 degrees, or 150 degrees, and the first V-FOV is 60 degrees, 65 degrees, 70 degrees, or 75 degrees. In actual application, the ROI of the forward field of view may be set or adjusted based on an actual requirement.

In a possible implementation, the first driving decision is a driving decision for traveling in a current traveling lane that is currently executed by the intelligent driving apparatus, and determining whether the detection field of view satisfies the requirement of the first driving decision is specifically as follows: determining whether a proportion of a blocked lateral field of view of the intelligent driving apparatus exceeds a third threshold. The third threshold may be 0.3, 0.4, 0.5, 0.6, or the like. This is not limited in embodiments of this application. That the proportion of the blocked lateral field of view of the intelligent driving apparatus exceeds the third threshold may be understood as that the intelligent driving apparatus has a lateral blind spot. In other words, that the proportion of the blocked lateral field of view of the intelligent driving apparatus exceeds the third threshold may be replaced with that the intelligent driving apparatus has a lateral blind spot. FIG. 7 shows an example of a "sudden intrusion" scenario according to an embodiment of this application. As shown in FIG. 7, in the "sudden intrusion" scenario, when the intelligent driving apparatus passes an intersection, an opening, or a gap between vehicles at which "sudden intrusion" may occur, because there is the lateral blind spot, when a pedestrian, a non-motor vehicle, or a motor vehicle suddenly appears from the blind spot, a risk may occur due to a lack of response time. An objective of determining whether the proportion of the blocked lateral field of view of the intelligent driving apparatus exceeds the third threshold is to detect whether there is a lateral blind spot when the intelligent driving apparatus passes the intersection, the opening, or the gap between vehicles at which "sudden intrusion" may occur. The intelligent driving apparatus may alternatively determine, in another manner, whether there is a lateral blind spot. This is not limited in embodiments of this application. The proportion of the blocked lateral field of view of the intelligent driving apparatus may be a ratio of a second H-FOV to a third H-FOV. The third H-FOV is an H-FOV when there is no blocking in a forward field of view of the intelligent driving apparatus. For example, the third H-FOV is 120 degrees, 130 degrees, 135 degrees, 140 degrees, 150 degrees, or the like. The second H-FOV is a difference between the third H-FOV and an H-FOV of the forward field of view detected by the intelligent driving apparatus. In other words, the second H-FOV is equal to the third H-FOV minus the H-FOV of the forward field of view detected by the intelligent driving apparatus. For example, the second H-FOV is 10 degrees, 20 degrees, 30 degrees, 45 degrees, 60 degrees, or the like.

603: When the detection field of view does not satisfy the requirement of the first driving decision, control the intelligent driving apparatus to execute a second driving decision to expand the detection field of view, or control the intelligent driving apparatus to execute a second driving decision to reduce a speed of the intelligent driving apparatus.

In a possible implementation, the second driving decision is a lateral offset, and before controlling the intelligent driving apparatus to execute the second driving decision to expand the detection field of view, the intelligent driving apparatus determines that the intelligent driving apparatus currently satisfies a lateral offset condition. For example, the intelligent driving apparatus determines, based on a lane line type, a lane width, and a current road condition, whether the intelligent driving apparatus currently satisfies the lateral offset condition. When determining that the intelligent driving apparatus currently does not satisfy the lateral offset condition, the intelligent driving apparatus may follow a vehicle or decelerate in a current lane. In this implementation, safety of executing the second driving decision can be improved.

In a possible implementation, the second driving decision is a lane change, and before controlling the intelligent driving apparatus to execute the second driving decision to expand the detection field of view, the intelligent driving apparatus determines that the intelligent driving apparatus currently satisfies a lane change condition. For example, the intelligent driving apparatus determines, based on a lane line type, a lane width, and a current road condition, whether the intelligent driving apparatus currently satisfies the lane change condition. When determining that the intelligent driving apparatus currently does not satisfy the lane change condition, the intelligent driving apparatus may follow a vehicle or decelerate in a current lane. In this implementation, safety of executing the second driving decision can be improved.

In a possible implementation, the second driving decision is lane borrowing, and before controlling the intelligent driving apparatus to execute the second driving decision to expand the detection field of view, the intelligent driving apparatus determines that the intelligent driving apparatus currently satisfies a lane borrowing condition. For example, the intelligent driving apparatus determines, based on a lane line type, a lane width, and a current road condition, whether the intelligent driving apparatus currently satisfies the lane borrowing condition. When determining that the intelligent driving apparatus currently does not satisfy the lane borrowing condition, the intelligent driving apparatus may follow a vehicle or decelerate in a current lane. In this implementation, safety of executing the second driving decision can be improved.

In a possible implementation, when the first driving decision is a lane change, lane borrowing, or overtaking that the intelligent driving apparatus or the driver expects to execute, the second driving decision is a lateral offset. In this application, when performing the lateral offset, the intelligent driving apparatus may perform the lateral offset in a current traveling lane, or may perform the lateral offset outside the current traveling lane. That the detection field of view does not satisfy the requirement of the first driving decision is specifically as follows: A proportion of a blocked field of view for a target lane exceeds a first threshold, where the target lane is a lane to which the intelligent driving apparatus needs to change or a lane that the intelligent driving apparatus needs to borrow when the intelligent driving apparatus executes the first driving decision. That the proportion of the blocked field of view for the target lane exceeds the first threshold indicates that the intelligent driving apparatus or the driver fails to learn of a field of view required by the intelligent driving apparatus to execute the first driving decision. In other words, that the proportion of the blocked field of view for the target lane exceeds the first threshold indicates that the intelligent driving apparatus or the driver cannot determine whether it is safe to perform first driving behavior and whether the first driving behavior complies with a traffic rule. For example, before changing from the current traveling lane to the target lane, the driver needs to determine, based on a field of view for the target lane, whether the intelligent driving apparatus satisfies a condition for changing to the target lane. When it is determined that it is safe for the intelligent driving apparatus to change to the target lane and the traffic rule is complied with (that is, the condition for changing to the target lane is satisfied), the intelligent driving apparatus changes to the target lane. The lateral offset may be a lateral offset performed by the intelligent driving apparatus toward a side close to the target lane. In this implementation, when the proportion of the blocked field of view for the target lane exceeds the first threshold, the intelligent driving apparatus is controlled to execute the second driving decision to expand the detection field of view, so that the detection field of view can be expanded in time, to help execute the first driving decision.

In a possible implementation, when the first driving decision is a driving decision for passing a front intersection that the intelligent driving apparatus or the driver expects to execute, the second driving decision is a lateral offset. That the detection field of view does not satisfy the requirement of the first driving decision is specifically as follows: A field of view for a traffic light at the front intersection is blocked or a proportion of a blocked forward field of view of the intelligent driving apparatus exceeds a second threshold. That the proportion of the blocked forward field of view of the intelligent driving apparatus exceeds the second threshold indicates that the intelligent driving apparatus fails to detect a field of view for the forward intersection, in other words, a visible region for the front intersection is blocked. In this implementation, when the field of view for the traffic light at the front intersection is blocked or the proportion of the blocked forward field of view of the intelligent driving apparatus exceeds the second threshold, the intelligent driving apparatus is controlled to execute the second driving decision to expand the detection field of view, so that the detection field of view can be expanded in time, to help safely pass the front intersection.

In a possible implementation, when the first driving decision is a driving decision for traveling in a current traveling lane that is currently executed by the intelligent driving apparatus, the second driving decision is a lane change, lane borrowing, or a lateral offset. That the detection field of view does not satisfy the requirement of the first driving decision is specifically as follows: A proportion of a blocked lateral field of view of the intelligent driving apparatus exceeds a third threshold. Optionally, before controlling the intelligent driving apparatus to execute the second driving decision to expand the detection field of view, the intelligent driving apparatus outputs first prompt information, where the first prompt information is used to inform the driver whether to agree to execute a driving decision for the lane change, lane borrowing, or lateral offset. Outputting the first prompt information may be displaying the first prompt information on a central display, or may be outputting the first prompt information through an audio device, for example, AI voice in an intelligent cockpit. In this implementation, when the proportion of the blocked lateral field of view of the intelligent driving apparatus exceeds the third threshold, the intelligent driving apparatus is controlled to perform the lane change, lane borrowing, or lateral offset, so that traveling safety can be improved.

In a possible implementation, when the first driving decision is a driving decision for traveling at a first speed in a current traveling lane that is currently executed by the intelligent driving apparatus, the second driving decision is a driving decision for traveling at a second speed in the current traveling lane, and the second speed is lower than the first speed. That the detection field of view does not satisfy the requirement of the first driving decision is specifically as follows: A proportion of a blocked lateral field of view of the intelligent driving apparatus exceeds a third threshold. Optionally, before controlling the intelligent driving apparatus to execute the second driving decision to reduce the speed of the intelligent driving apparatus, the intelligent driving apparatus outputs second prompt information, where the second prompt information is used to inform the driver that the intelligent driving apparatus is to be controlled to decelerate. Outputting the second prompt information may be displaying the second prompt information on a central display, or may be outputting the second prompt information through an audio device, for example, AI voice in an intelligent cockpit. In this implementation, when the proportion of the blocked lateral field of view of the intelligent driving apparatus exceeds the third threshold, the intelligent driving apparatus is controlled to travel at the second speed in the current traveling lane, that is, reduce the traveling speed, so that traveling safety can be improved.

In a possible implementation, before controlling the intelligent driving apparatus to execute the second driving decision, the intelligent driving apparatus outputs a function enabling request, where the function enabling request is used to request to enable a function of controlling the intelligent driving apparatus to execute the second driving decision. In some possible embodiments, when the detection field of view does not satisfy the requirement of the first driving decision, the intelligent driving apparatus determines whether the intelligent driving apparatus currently satisfies an active exploration condition; and when determining that the intelligent driving apparatus currently satisfies the active exploration condition, the intelligent driving apparatus outputs the function enabling request. After it is determined that the driver agrees or allows to enable the active exploration function (namely, the function of controlling the intelligent driving apparatus to execute the second driving decision), the active exploration function is enabled. When it is determined that the driver does not agree to enable the active exploration function or no instruction indicating that the driver agrees to enable the active exploration function is received within preset duration (for example, 10 seconds, 20 seconds, or 30 seconds) after the function enabling request is output, an intelligent driving mode or a human driving mode is entered from an AEA mode.

In a possible implementation, after controlling the intelligent driving apparatus to execute the second driving decision, the intelligent driving apparatus outputs exploration process information through a display apparatus, where the exploration process information is used by the display apparatus to display a process of expanding the detection field of view. It may be understood that the display apparatus may display an active exploration process in real time based on the received exploration process information. An example in which the display apparatus may display the active exploration process in real time is as follows: After the driver confirms to enable the active exploration function, the intelligent driving apparatus first indicates, through the display apparatus, "waiting for an active exploration occasion", indicates "active exploration is being performed" in a process of performing active exploration, displays an exploration path through the display apparatus, and indicates "active exploration is completed" after reaching a specified position. The specified position is a position to which the intelligent driving apparatus needs to move during active exploration. In this implementation, the intelligent driving apparatus outputs the exploration process information through the display apparatus, so that the driver learns of the active exploration process.

In a possible implementation, the intelligent driving apparatus outputs field of view blocking information through the display apparatus, where the field of view blocking information is used by the display apparatus to display a position and a blocking proportion of a field of view blocking region of the intelligent driving apparatus. For example, the intelligent driving apparatus displays the position and the blocking proportion of the field of view blocking region of the intelligent driving apparatus in real time through a central display in an intelligent cockpit. In this implementation, the intelligent driving apparatus outputs the field of view blocking information through the display apparatus, so that the driver more intuitively learns of the position and the blocking proportion of the field of view blocking region of the intelligent driving apparatus.

604: When the requirement of the first driving decision is satisfied after the detection field of view is expanded, control the intelligent driving apparatus to execute the first driving decision.

Step 604 is optional. In a possible implementation, the first driving decision is a lane change, lane borrowing, or overtaking that the intelligent driving apparatus or the driver expects to execute. When the requirement of the first driving decision is satisfied and a lane change condition is satisfied after the detection field of view is expanded, the intelligent driving apparatus is controlled to execute the first driving decision. That the lane change condition is satisfied may be that no target (a vehicle, a traveling vehicle, an obstacle, or the like) is detected in the ROI of the target lane. For example, when determining, based on an expanded detection field of view, that no target (a vehicle, a traveling vehicle, an obstacle, or the like) is detected in the ROI of the target lane, the intelligent driving apparatus controls the intelligent driving apparatus to execute the first driving decision.

Step 604 may be replaced with the following: When the requirement of the first driving decision is satisfied after the detection field of view is expanded, control the intelligent driving apparatus to execute a driving decision for continuing traveling in the current lane. In a possible implementation, the first driving decision is a lane change, lane borrowing, or overtaking that the intelligent driving apparatus or the driver expects to execute. When the requirement of the first driving decision is satisfied and the lane change condition is not satisfied after the detection field of view is expanded, the driving decision for continuing driving in the current lane is controlled to be executed. For example, when determining, based on the expanded detection field of view, that a target (a vehicle, a traveling vehicle, an obstacle, or the like) is detected in the ROI of the target lane, the intelligent driving apparatus controls the intelligent driving apparatus to execute the driving decision for continuing driving in the current lane.

Step 604 may be replaced with the following: When the requirement of the first driving decision is satisfied after the detection field of view is expanded, the intelligent driving apparatus determines, based on the expanded detection field of view, a driving decision that needs to be executed. In a possible implementation, the first driving decision is a driving decision for passing a front intersection that the intelligent driving apparatus or the driver expects to execute. For example, the first driving decision is the driving decision for passing the front intersection that the intelligent driving apparatus or the driver expects to execute. When a traffic light is detected after the detection field of view is expanded, the intelligent driving apparatus enters the intelligent driving mode, that is, returns to the intelligent driving mode to determine whether to perform passing.

Step 604 may be replaced with the following: When the requirement of the first driving decision is not satisfied after the detection field of view is expanded, control the intelligent driving apparatus to execute a third driving decision to offset toward a center of the current traveling lane. In this way, traveling safety can be improved.

605: When the detection field of view satisfies the requirement of the first driving decision, control the intelligent driving apparatus to execute the first driving decision.

In embodiments of this application, when the detection field of view does not satisfy the requirement of the first driving decision, the intelligent driving apparatus is controlled to execute the second driving decision to expand the detection field of view, so that the detection field of view can be expanded in time, to help execute the first driving decision. When the detection field of view does not satisfy the requirement of the first driving decision, the intelligent driving apparatus is controlled to execute the second driving decision to reduce the speed of the intelligent driving apparatus, so that traveling safety can be improved.

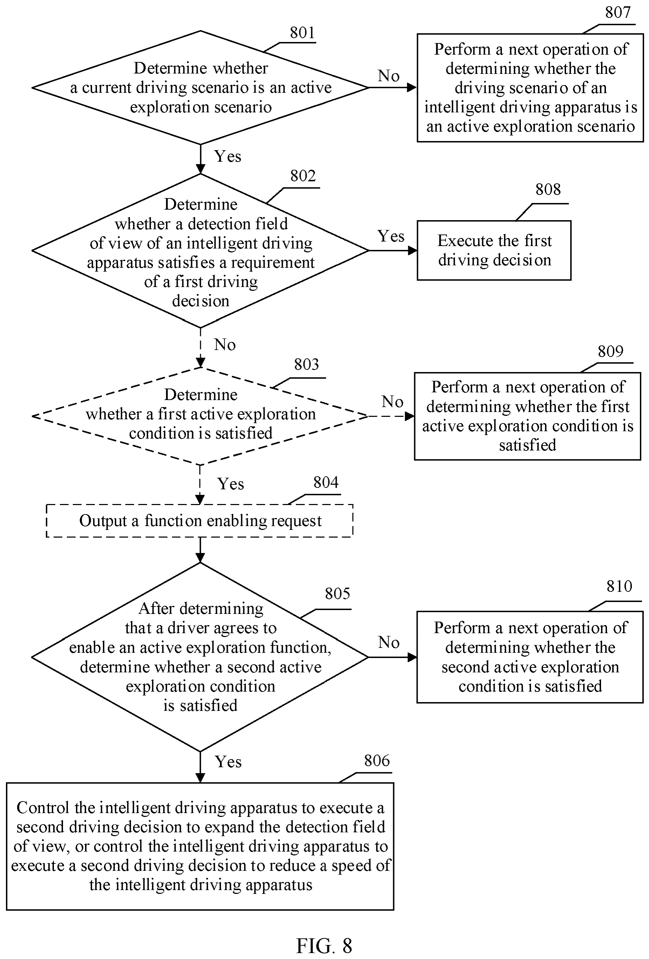

FIG. 8 is a flowchart of another intelligent driving method according to an embodiment of this application. A method procedure in FIG. 8 is a possible implementation of the method described in FIG. 6. In this implementation, when a current traveling scenario of an intelligent driving apparatus is an active exploration scenario, whether an active exploration condition is satisfied is determined based on a detection field of view, a driving decision, and a road condition, so that the detection field of view can be expanded in time, to help determine a more appropriate driving decision. As shown in FIG. 8, the method includes the following steps.

801: The intelligent driving apparatus determines whether a current driving scenario is an active exploration scenario.

That the intelligent driving apparatus determines whether the current driving scenario is an active exploration scenario is specifically as follows: The intelligent driving apparatus determines whether the current driving scenario is any driving scenario in a target scenario set, where the target scenario set may include the following Scenario 1, Scenario 2, Scenario 3, and other driving scenarios.

802: When the current driving scenario of the intelligent driving apparatus is an active exploration scenario, the intelligent driving apparatus determines whether a detection field of view of the intelligent driving apparatus satisfies a requirement of a first driving decision.

For an implementation in which the intelligent driving apparatus determines whether the detection field of view of the intelligent driving apparatus satisfies the requirement of the first driving decision, refer to step 602 in FIG. 6. Details are not described herein again. When the current driving scenario of the intelligent driving apparatus is not an active exploration scenario, whether the driving scenario of the intelligent driving apparatus is an active exploration scenario continues to be determined. For example, after it is determined that the current driving scenario of the intelligent driving apparatus is not an active exploration scenario, whether the current driving scenario of the intelligent driving apparatus is an active exploration scenario is determined again after waiting duration (for example, 10 seconds, 20 seconds, or 30 seconds).

803: When the detection field of view does not satisfy the requirement of the first driving decision, the intelligent driving apparatus determines whether a first active exploration condition is satisfied.

That the intelligent driving apparatus determines whether the first active exploration condition is satisfied may be determining whether a static objective driving scenario satisfies the active exploration condition. For example, the intelligent driving apparatus is to perform active exploration through a lateral offset, but a width of a current lane is insufficient to support the lateral offset. In this case, the intelligent driving apparatus does not satisfy the first active exploration condition. For another example, the intelligent driving apparatus determines, based on a blocking status of the detection field of view and a size of a passable region of the intelligent driving apparatus, whether the intelligent driving apparatus currently satisfies (or meets) the first active exploration condition. For another example, whether the intelligent driving apparatus satisfies the first active exploration condition is determined based on constraints such as a lane line type and a lane width and factors such as whether active exploration can enable the detection field of view to satisfy the requirement of the first driving decision. The lane line type determines a constraint on a lateral offset range of the intelligent driving apparatus. For example, a dashed line represents that the intelligent driving apparatus may properly borrow a lane, a solid line represents that a body of the intelligent driving apparatus cannot cross a solid line position, and a road edge represents that the intelligent driving apparatus needs to be kept away from the road edge by a specific safe distance. A lane width, as a numerical result, directly determines a maximum lateral offset distance under a constraint of the lane line type. For example, for a solid-line lane with a width of 3.75 m, if the ego vehicle is currently located in a center of the lane, a maximum lateral offset distance is a half of a lane width minus a half of a width of the ego vehicle, and is approximately 0.925 m. For example, determining whether the intelligent driving apparatus satisfies the first active exploration condition is determining whether the maximum lateral offset distance of the intelligent driving apparatus is greater than a threshold 1, where the threshold 1 may be 0.3 m, 0.4 m, 0.5 m, or the like. When a traffic rule is complied with and the maximum lateral offset distance is greater than the threshold 1, the intelligent driving apparatus determines that the first active exploration condition is satisfied. For another example, the first active exploration condition includes the following: The maximum lateral offset distance of the intelligent driving apparatus is greater than the threshold 1, and active exploration can enable the detection field of view to satisfy the requirement of the first driving decision. It should be noted that, determining whether the intelligent driving apparatus satisfies the first active exploration condition includes but is not limited to the foregoing example factors.

804: Output a function enabling request when the intelligent driving apparatus satisfies the first active exploration condition.

The function enabling request is used to request to enable an active exploration function.

In some embodiments, the intelligent driving apparatus may interact with a driver through AI voice, a central display, and a steering wheel button in an intelligent cockpit. A result obtained by a field of view blocking detection module through calculation may be displayed on the central display in a digital and graphical manner. The driver can intuitively learn of a target detected by a sensor, a detection range (namely, the detection field of view), a blocked region that cannot be detected, and a confidence level of the detected target.

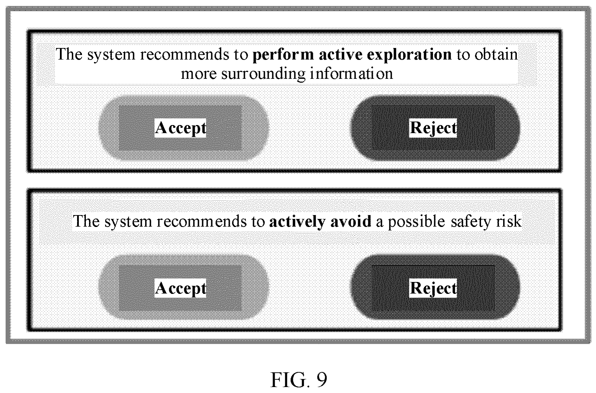

When the first active exploration condition is satisfied, the intelligent driving apparatus may output the function enabling request in the following two manners: ① Pop-up notification on the central display. ② Intelligent voice broadcast. The driver can complete human-machine interaction in the following three manners: ① Tap the central display to select. ② Press the OK or Cancel button on the steering wheel. ③ Intelligent voice interaction confirmation. FIG. 9 shows an example of outputting a function enabling request on a human-machine interface. When the function enabling request is output on the human-machine interface, key information on the central display is not blocked. FIG. 9 shows an accept option and a reject option. When the driver taps the accept option, it indicates that the driver agrees to perform active exploration to obtain more surrounding information. When the driver taps the reject option, it indicates that the driver refuses to perform active exploration to obtain more surrounding information. Agreeing to perform active exploration to obtain more surrounding information indicates that the driver agrees that the intelligent driving apparatus executes a second driving decision to expand the detection field of view. Agreeing to actively avoid a possible safety risk indicates that the driver agrees that the intelligent driving apparatus executes the second driving decision to reduce a speed of the intelligent driving apparatus or avoid the possible safety risk. It should be noted that, when the driver agrees to perform active exploration to obtain more surrounding information and/or agrees to actively avoid a possible safety risk, the intelligent driving apparatus enables the active exploration function.

When performing active exploration, the intelligent driving apparatus may remind the driver of an exploration process through a human-machine interface (HMI) or a voice, that is, remind the driver of an active exploration process. The intelligent driving apparatus may exit (or disable) the active exploration function in the following three manners: ① The function is disabled through AI voice, and the intelligent driving apparatus automatically returns to an original position. ② The function is exited by pressing a cancel button on a steering wheel, and the intelligent driving apparatus automatically returns to an original position. ③ The driver takes over horizontally and vertically, and the intelligent driving apparatus switches to a human driving mode.

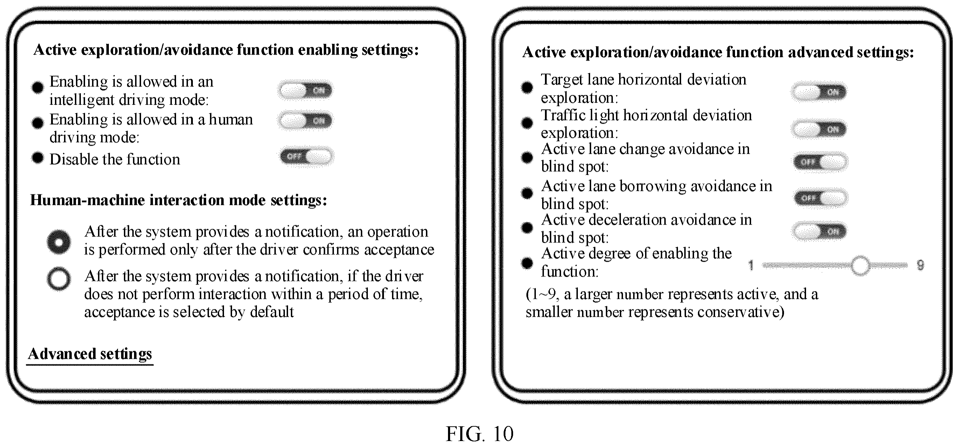

To cater for habits of different drivers, an active exploration/avoidance function is provided with soft switches and various configurations for the drivers to select based on personal preferences. Options include whether the active exploration function is allowed to be enabled in the human driving mode or an intelligent driving mode, human-machine interaction mode settings, an active degree of enabling the function, an exploration action allowed to be performed in each scenario, and the like, as shown in FIG. 10. FIG. 10 shows an example of an active exploration setting interface according to an embodiment of this application. In FIG. 10, ON indicates that the function is enabled, and OFF indicates that the function is disabled. For example, enabling is allowed in the intelligent driving mode corresponds to an ON button, indicating that the active exploration function is allowed to be enabled in the intelligent driving mode; and enabling is not allowed in the intelligent driving mode corresponds to an OFF button, indicating that the active exploration function is not allowed to be enabled in the intelligent driving mode.

805: After determining that the driver agrees to enable the active exploration function, determine whether the intelligent driving apparatus currently satisfies a second active exploration condition.

After determining that the driver agrees to enable the active exploration function, the intelligent driving apparatus enables the active exploration function, and further determines whether the intelligent driving apparatus satisfies the second active exploration condition. Determining whether the intelligent driving apparatus satisfies the first active exploration condition in step 803 may be understood as performing some static "pre-determining", to be specific, after determining that there is a condition for active exploration, the intelligent driving apparatus requests the driver to perform confirmation. After the driver confirms to enable the active exploration function, the intelligent driving apparatus performs "execution determining", namely, the determining operation in step 805. If the second active exploration condition is satisfied, the intelligent driving apparatus is controlled to perform active exploration decision-making behavior, namely, the second driving decision. The first "pre-determining" is determining whether a static objective scenario satisfies the active exploration condition. For example, active exploration is to be performed through a lateral offset, but a width of a current lane is insufficient to support the lateral offset. The pre-determining represents that the intelligent driving apparatus determines whether there is a condition for performing active exploration within a period of time. The execution determining is performed after a pre-determining condition is satisfied and the driver confirms to perform active exploration. The intelligent driving apparatus determines, based on a real-time road condition, whether the second active exploration condition is satisfied. Once the execution determining succeeds, the intelligent driving apparatus immediately executes an active exploration command. A reason for designing two times of determining is explained herein: An actual road condition is complex and variable. If there is only one time of determining, to be specific, the driver is immediately requested to perform confirmation and then execution is performed after the first active exploration condition is currently satisfied, this policy is not feasible. This is because it is difficult to ensure that the first active exploration condition is always satisfied within time for requesting the driver to confirm. Due to this policy, the driver misses a confirmation occasion and is required to perform confirmation as soon as possible. This significantly deteriorates function use experience. Therefore, after the pre-determining condition is satisfied, obtaining permission from the driver and letting the intelligent driving apparatus determine a final execution occasion is a scientific solution.

Step 803 and step 804 are optional. In a possible implementation, the driver presets that the driver accepts an active exploration request by default, that is, agrees with the function enabling request by default. In other words, the intelligent driving apparatus may directly enable the active exploration function without confirmation of the driver. In this implementation, after performing step 802, the intelligent driving apparatus directly performs step 805 (that is, determines whether the second active exploration condition is satisfied), and does not need to perform step 803 and step 804. It may be understood that, when the driver presets that the driver accepts the active exploration request by default, step 805 is determining whether the second active exploration condition is satisfied.

806: When the intelligent driving apparatus satisfies the second active exploration condition, control the intelligent driving apparatus to execute a second driving decision to expand the detection field of view, or control the intelligent driving apparatus to execute a second driving decision to reduce a speed of the intelligent driving apparatus.

807: When the current driving scenario of the intelligent driving apparatus is not an active exploration scenario, perform a next operation of determining whether the driving scenario of the intelligent driving apparatus is an active exploration scenario.

For example, when the current driving scenario of the intelligent driving apparatus is not an active exploration scenario, the intelligent driving apparatus waits for 10 seconds, 20 seconds, 30 seconds, 1 minute, or 2 minutes, and then performs the next operation of determining whether the current driving scenario of the intelligent driving apparatus is an active exploration scenario, until the current driving scenario of the intelligent driving apparatus is an active exploration scenario. In other words, before the current driving scenario of the intelligent driving apparatus is an active exploration scenario, the intelligent driving apparatus may periodically determine whether the current driving scenario of the intelligent driving apparatus is an active exploration scenario.

808: When the detection field of view satisfies the requirement of the first driving decision, the intelligent driving apparatus executes the first driving decision.

809: When the intelligent driving apparatus does not satisfy the first active exploration condition, perform a next operation of determining whether the first active exploration condition is satisfied.

For example, when determining that the intelligent driving apparatus does not satisfy the first active exploration condition, the intelligent driving apparatus waits for a period of time, for example, 30 seconds, 1 minute, or 2 minutes, and then performs the next operation of determining whether the first active exploration condition is satisfied. In other words, before satisfying the first active exploration condition, the intelligent driving apparatus may periodically determine whether the first active exploration condition is satisfied.

810: When the intelligent driving apparatus does not satisfy the second active exploration condition, perform a next operation of determining whether the second active exploration condition is satisfied.

For example, when determining that the intelligent driving apparatus does not satisfy the second active exploration condition, the intelligent driving apparatus waits for a period of time, for example, 30 seconds, 1 minute, or 2 minutes, and then performs the next operation of determining whether the second active exploration condition is satisfied. In other words, before satisfying the second active exploration condition, the intelligent driving apparatus may periodically determine whether the second active exploration condition is satisfied.

In embodiments of this application, when the current traveling scenario of the intelligent driving apparatus is an active exploration scenario, whether the active exploration condition is satisfied is determined based on the detection field of view, a driving decision, and a road condition, so that the detection field of view can be expanded in time, to help determine a more appropriate driving decision.

The intelligent driving method provided in embodiments of this application may be applied to a vehicle that is equipped with one or more sensing sensors (such as a camera, a lidar, and a millimeter-wave radar) and that has an intelligent driving function at level 2 or higher. After the intelligent driving apparatus enables an AEA mode, the AEA mode can work in various road scenarios and can implement active exploration when a field of view is blocked.

Driving scenarios in which the intelligent driving method provided in embodiments of this application is used include but are not limited to the foregoing Scenario 1, Scenario 2, and Scenario 3. The following describes application of the intelligent driving method provided in embodiments of this application in Scenario 1, Scenario 2, and Scenario 3.

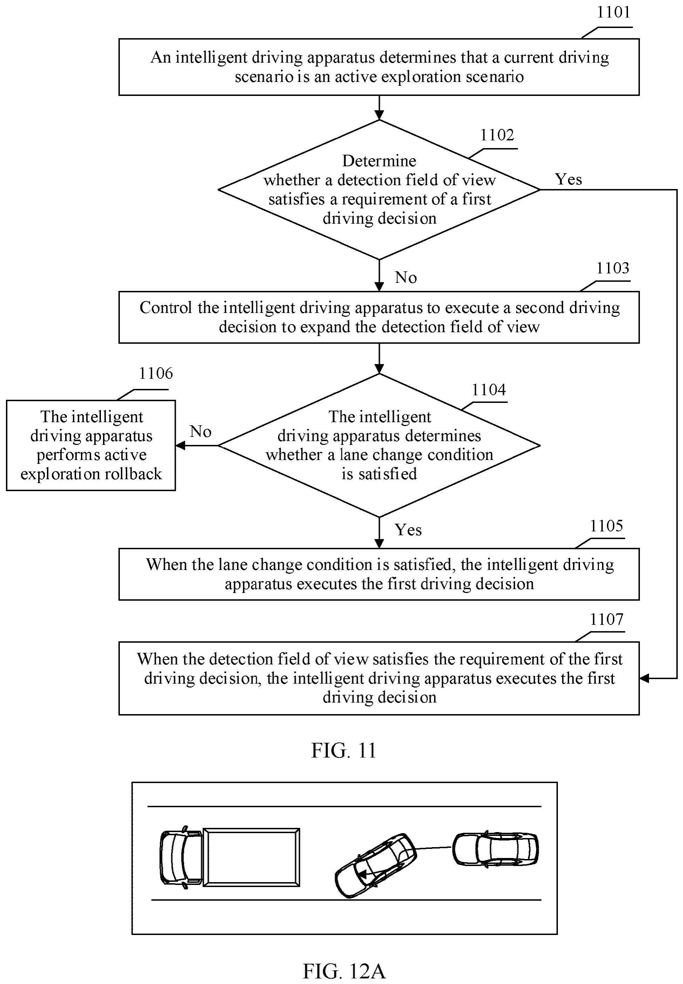

FIG. 11 is a flowchart of another intelligent driving method according to an embodiment of this application. The method is applied to Scenario 1. A method procedure in FIG. 11 is a possible implementation of the method described in FIG. 6. As shown in FIG. 11, the method includes the following steps.

1101: An intelligent driving apparatus determines that a current driving scenario is an active exploration scenario.

For example, the intelligent driving apparatus identifies, based on a result of detecting a target by using a sensing algorithm, that there is a slow vehicle in front of the ego vehicle, and finds, by analyzing a surrounding scenario (including a traffic flow density, a lane line type, and the like), that a lane change and overtaking condition is satisfied, that is, determines that the current driving scenario is an active exploration scenario. Step 1101 may be replaced with the following: An intelligent driving apparatus determines that a current driving scenario is a driving scenario in which there is an obstacle in front of the ego vehicle.

1102: The intelligent driving apparatus determines whether a detection field of view satisfies a requirement of a first driving decision.

The first driving decision is a driving decision for a lane change, lane borrowing, or overtaking that the intelligent driving apparatus or a driver expects to execute. A possible implementation of step 1102 is as follows: The intelligent driving apparatus determines, based on a proportion of an area of a blocked region in an ROI of a target lane, whether the detection field of view satisfies the requirement of the first driving decision. Before performing step 1102, the intelligent driving apparatus determines the proportion of the area of the blocked region in the ROI of the target lane. When the proportion of the area of the blocked region in the ROI of the target lane exceeds a first threshold, it is determined that the detection field of view does not satisfy the requirement of the first driving decision. When the proportion of the area of the blocked region in the ROI of the target lane does not exceed the first threshold, it is determined that the detection field of view satisfies the requirement of the first driving decision. The first threshold may be 0.2, 0.3, 0.4, 0.5, or the like. In some embodiments, the intelligent driving apparatus projects, on a central display, whether a detection region of a sensor of the intelligent driving apparatus is blocked, and a confidence level of a detected target is also displayed on the central display by using a method like a color depth. An HMI may always display the detection field of view of the intelligent driving apparatus starting from power-on of the intelligent driving apparatus.

1103: When the detection field of view does not satisfy the requirement of the first driving decision, control the intelligent driving apparatus to execute a second driving decision to expand the detection field of view.

In a possible implementation, before controlling the intelligent driving apparatus to execute the second driving decision, the intelligent driving apparatus determines whether an active exploration condition is satisfied. For details, refer to step 803. If the active exploration condition is not satisfied, a lane change and overtaking are canceled and a driving decision for following a vehicle is executed within a period of time, and the driving decision may be notified to the driver through AI voice. If the active exploration condition is satisfied, a lateral offset distance of active exploration and an active exploration occasion may be calculated based on factors such as a traffic flow and a vehicle following distance. The intelligent driving apparatus may calculate, in real time based on a blocking status of the detection field of view and a predicted movement trajectory of a surrounding target, a lateral offset distance required for sensing an ROI in different periods, to further dynamically adjust the lateral offset distance. If it is determined, based on a prediction result, that a target causing field of view blocking only temporarily affects a blind spot range, the lateral offset does not need to be performed. The vehicle following distance affects a lateral exploration offset distance because the vehicle following distance directly affects a proportion of a blocked region in the ROI. A shorter vehicle following distance indicates a larger range blocked by the front vehicle and a longer lateral offset distance. If an edge of a vehicle body of the front vehicle is 2 m away from a lane central line, and the ego vehicle (the intelligent driving apparatus) keeps a distance of 20 m from the front vehicle, a road condition after the adjacent lane is about 56 m away from the ego vehicle is completely blocked. If a road condition at a distance of 80 m is to be viewed, a lateral offset of about 0.6 m needs to be performed. However, if the ego vehicle keeps a distance of 25 m from the front vehicle, the road condition at a distance of 80 m can be viewed only by performing a lateral offset of about 0.3 m. The traffic flow affects selection of the active exploration occasion. For active exploration driving decision-making, if proper lane borrowing needs to be performed to determine a road condition ahead, it needs to be ensured that the ego vehicle does not collide with a surrounding vehicle and maintains a specific safe distance from the surrounding vehicle during active exploration. Therefore, whether there is a collision risk is calculated based on a vehicle movement status on a lane-borrowing side, and if there is a risk, active exploration is suppressed. It should be understood that the foregoing is merely an example of calculating the lateral offset distance of active exploration and the active exploration occasion. A manner of calculating the lateral offset distance of active exploration and the active exploration occasion is not limited in embodiments of this application.

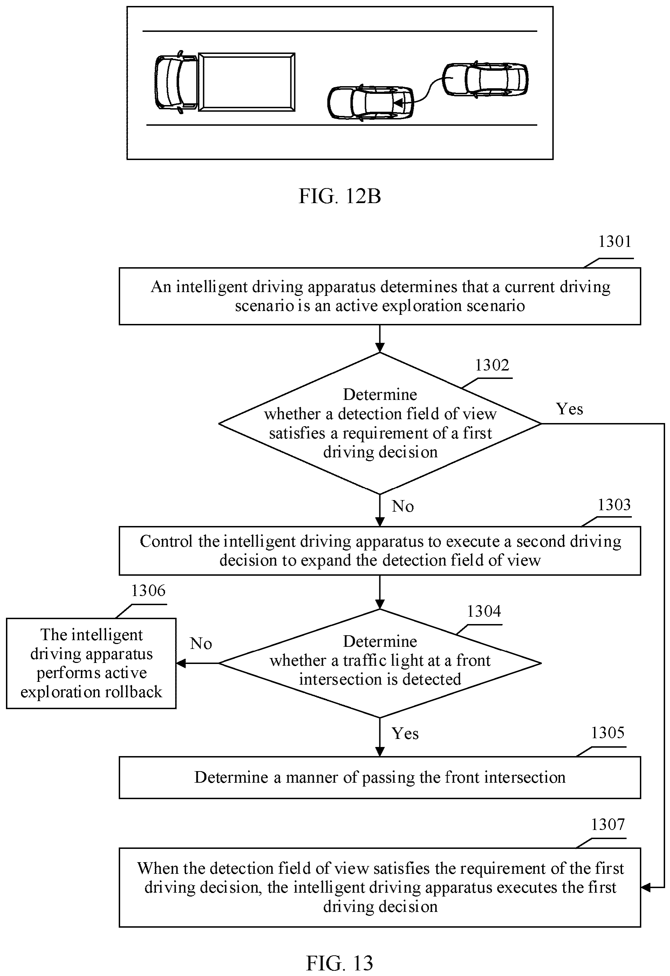

An example of controlling the intelligent driving apparatus to execute the second driving decision is as follows: If traveling space is sufficient (for example, both the intelligent driving apparatus and the front vehicle travel at a high speed, and a road condition is good), the intelligent driving apparatus determines the lateral offset distance based on a field of view that needs to be detected and that satisfies the requirement of the first driving decision; and determines a target reference line based on the lateral offset distance. The intelligent driving apparatus gradually deviates from the original lane central line to the target reference line in a horizontal direction, and keeps an original policy in a vertical direction, that is, keeps a driving speed. In this example, after the intelligent driving apparatus performs the lateral offset based on the lateral offset distance determined by the intelligent driving apparatus, the detection field of view of the intelligent driving apparatus may satisfy the requirement of the first driving decision. The lateral offset distance of the intelligent driving apparatus is the calculated lateral offset distance. Another example of controlling the intelligent driving apparatus to execute the second driving decision is as follows: If traveling space is insufficient (for example, in a traffic jam condition), the intelligent driving apparatus may determine a target reference point based on a field of view that needs to be detected and that satisfies the requirement of the first driving decision, and implement creep exploration based on the target reference point through slow appearing. In this example, the intelligent driving apparatus performs creep exploration based on the target reference point through slow appearing, and the detection field of view of the intelligent driving apparatus may satisfy the requirement of the first driving decision. In creep exploration, after determining the target reference point, the intelligent driving apparatus may plan a trajectory to a target point based on surrounding freespace (Freespace), and may even implement appearing exploration in combination with reversing if a condition permits. During exploration, AI voice may be used to remind the driver of a current exploration manner and whether exploration is completed. A manner in which the intelligent driving apparatus gradually deviates from the original lane central line to the target reference line in the horizontal direction may be referred to as traveling exploration. Traveling exploration is applicable to a scenario in which a distance between the intelligent driving apparatus and the front vehicle is long. Traveling exploration expands the detection field of view by deviating from the lane. Creep exploration is applicable to a short-distance and low-speed driving scenario. Creep exploration expands the detection field of view by moving in limited space. FIG. 12A is a diagram of creep exploration. FIG. 12B is a diagram of traveling exploration.

In a possible implementation, before controlling the intelligent driving apparatus to execute the second driving decision, the intelligent driving apparatus determines an occasion (or a moment) for executing the second driving decision, namely, an occasion for performing active exploration; and controls, at the occasion, the intelligent driving apparatus to execute the second driving decision to expand the detection field of view.

In a possible implementation, before controlling the intelligent driving apparatus to execute the second driving decision, the intelligent driving apparatus outputs a function enabling request. An objective of outputting the function enabling request is to actively inform the driver whether to agree that the intelligent driving apparatus performs active exploration to obtain more surrounding information, that is, whether to agree to enable an active exploration function. After it is determined that the driver agrees to enable the active exploration function, the intelligent driving apparatus is controlled to execute the second driving decision to expand the detection field of view. The driver may confirm, in a plurality of forms, to accept active exploration (that is, agree to enable the active exploration function) or reject active exploration (that is, refuse to enable the active exploration function). After the driver rejects active exploration, the intelligent driving apparatus no longer prompts the driver to perform active exploration within a period of time.

1104: The intelligent driving apparatus determines whether a lane change condition is satisfied.

The lane change condition may include: the ROI of the target lane is visible, and no target is detected in the ROI of the target lane. That the ROI of the target lane is visible means that a proportion of the blocked region in the ROI of the target lane is less than the first threshold. That no target is detected in the ROI of the target lane means that there is no target like a pedestrian, a motor vehicle, or a non-motor vehicle in the ROI of the target lane.

When the intelligent driving apparatus performs active exploration and reaches a specified position, field of view blocking is reduced through side-move exploration, so that more sensing information is viewed. Based on sensing information with a higher confidence level, the intelligent driving apparatus may re-determine the previously generated first driving decision, that is, determine whether an expanded detection field of view satisfies the requirement of the first driving decision.

1105: When the lane change condition is satisfied, the intelligent driving apparatus executes the first driving decision.

When the lane change condition is satisfied, the intelligent driving apparatus may end active exploration, and enable an autonomous lane change function in an intelligent driving mode, that is, execute the first driving decision.

1106: When the lane change condition is not satisfied, the intelligent driving apparatus performs active exploration rollback.

That the intelligent driving apparatus performs active exploration rollback may be that the intelligent driving apparatus moves horizontally to a position before active exploration in the intelligent driving mode, or may be that the intelligent driving apparatus attempts, based on a space size, to move horizontally to a position before active exploration. For example, when performing active exploration, the intelligent driving apparatus performs a lateral offset of 0.5 m to the right side in a traveling exploration manner; and when performing active exploration rollback, the intelligent driving apparatus performs a lateral offset of 0.5 m to the left side in the traveling exploration manner.

1107: When the detection field of view satisfies the requirement of the first driving decision, the intelligent driving apparatus executes the first driving decision.

In a possible implementation, the intelligent driving apparatus outputs field of view blocking information through a display apparatus, where the field of view blocking information is used by the display apparatus to display a position and a blocking proportion of a field of view blocking region of the intelligent driving apparatus. There is a deviation between a sensing field of view of the driver and a sensing field of view of the sensor. This is caused by factors such as a type and a mounting position of the sensor. When such a deviation occurs, the driver may not understand behavior of the intelligent driving apparatus. The field of view detected by the sensor is displayed on the central display, to help the driver build confidence in intelligent driving.

In embodiments of this application, when the detection field of view does not satisfy the requirement of the first driving decision that the intelligent driving apparatus expects to execute, it is not conservatively assumed that the blocked region is definitely risky, or radically assumed that the blocked region is definitely safe. Instead, an actual road condition of the blocked region is confirmed by using a small action in an active exploration method. This not only ensures safety during a lane change, but also avoids function instability caused by sudden appearance of the target from the blocked region.

FIG. 13 is a flowchart of another intelligent driving method according to an embodiment of this application. The method is applied to Scenario 2. A method procedure in FIG. 13 is a possible implementation of the method described in FIG. 6. As shown in FIG. 13, the method includes the following steps.

1301: An intelligent driving apparatus determines that a current driving scenario is an active exploration scenario.

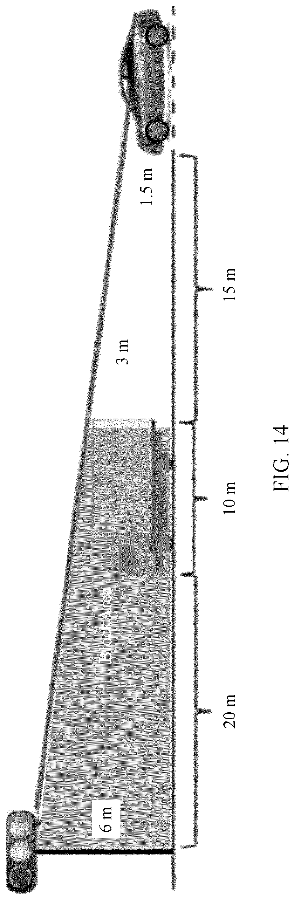

For example, when the intelligent driving apparatus identifies, based on a sensing algorithm and map module information, that the intelligent driving apparatus is currently following a front vehicle to pass an intersection with a traffic light, the intelligent driving apparatus determines that the current driving scenario is an active exploration scenario. When the ego vehicle follows the front vehicle to pass the intersection, the traffic light is not visible because the front vehicle blocks a field of view (the vehicle may be excessively close to the front vehicle or the front vehicle is large). When a driver or a sensor does not sense the traffic light and follows the front vehicle to pass the intersection, a traffic violation may occur. Step 1301 may be replaced with the following: An intelligent driving apparatus determines that a current driving scenario is a driving scenario in which the ego vehicle follows a front vehicle to pass an intersection with a traffic light. FIG. 14 is a diagram in which a vehicle in front of an intelligent driving apparatus blocks a traffic light. As shown in FIG. 14, it is assumed that a height of the traffic light is 6 m, a height of the front vehicle is 3 m, and a highest point sensed by the ego vehicle (namely, the intelligent driving apparatus) is 1.5 m. When the front vehicle is 20 m away from the traffic light, and a length of the front vehicle is 10 m, it can be learned through calculation that the sensor can detect the traffic light at the intersection only when the ego vehicle is at least 15 m away from the front vehicle. When a vehicle following distance between the front vehicle and the ego vehicle at a low speed is less than 15 m, an angle of view may be switched through active exploration.

1302: The intelligent driving apparatus determines whether a detection field of view satisfies a requirement of a first driving decision.

The first driving decision is a driving decision for passing the front intersection that the intelligent driving apparatus or the driver expects to execute. For step 1302, refer to step 602. For example, determining whether the detection field of view satisfies the requirement of the first driving decision is specifically determining whether the traffic light at the front intersection is blocked. The intelligent driving apparatus may determine an approximate position of the traffic light based on high-definition map information or historical information, and analyze whether the traffic light is blocked and whether the traffic light can be viewed through active exploration.

1303: When the detection field of view does not satisfy the requirement of the first driving decision, control the intelligent driving apparatus to execute a second driving decision to expand the detection field of view.

In a possible implementation, before controlling the intelligent driving apparatus to execute the second driving decision, the intelligent driving apparatus determines whether an active exploration condition is satisfied. For details, refer to step 803. The active exploration condition may include that the intelligent driving apparatus may detect the traffic light through active exploration. If the active exploration condition is not satisfied, active exploration is not performed. If the active exploration condition is satisfied, an active exploration path (traveling exploration or creep exploration) is planned based on passable space. For example, the intelligent driving apparatus plans an active exploration path (traveling exploration or creep exploration) based on passable space during traveling or at an extremely low speed/stationary on a premise of complying with a traffic rule. The intelligent driving apparatus may execute the second driving decision based on the planned active exploration path. In this implementation, safety of executing the second driving decision can be improved.

1304: The intelligent driving apparatus determines whether the traffic light at the front intersection is detected.

1305: When detecting the traffic light, the intelligent driving apparatus determines a manner of passing the front intersection.

For example, when the intelligent driving apparatus detects the traffic light, the intelligent driving apparatus determines, in a routine intelligent driving mode, the manner of passing the front intersection. For example, when the traffic light at the front intersection is a green light, the intelligent driving apparatus passes the traffic light.

1306: When the intelligent driving apparatus does not detect the traffic light, the intelligent driving apparatus performs active exploration rollback.

That the intelligent driving apparatus performs active exploration rollback may be that the intelligent driving apparatus attempts, based on a space size, to move horizontally to a position before active exploration.

1307: When the detection field of view satisfies the requirement of the first driving decision, the intelligent driving apparatus executes the first driving decision.

In embodiments of this application, when the intelligent driving apparatus is blocked by the front vehicle at the traffic light, the intelligent driving apparatus actively moves, on a premise of ensuring safety, to the side to observe a traffic light status, so as to avoid a running-red-light case.

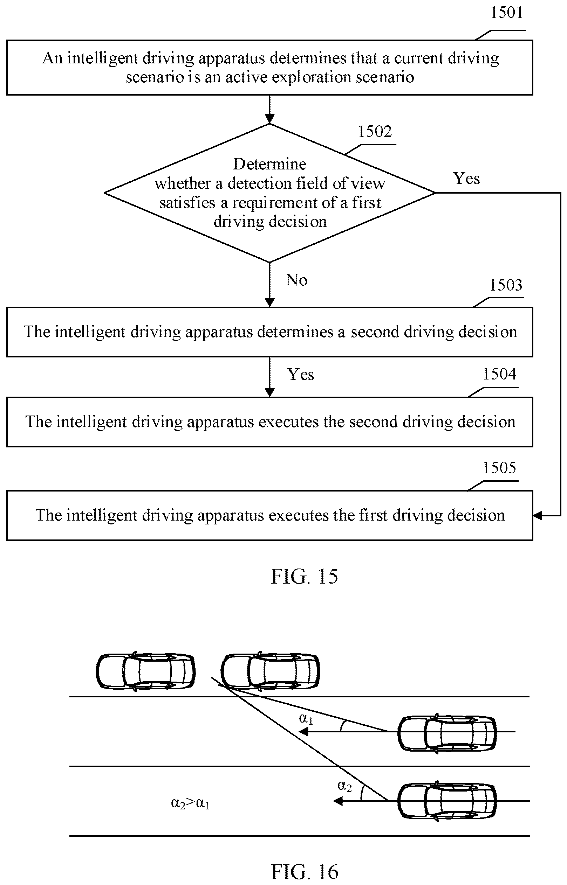

FIG. 15 is a flowchart of another intelligent driving method according to an embodiment of this application. The method is applied to Scenario 3. A method procedure in FIG. 15 is a possible implementation of the method described in FIG. 6. As shown in FIG. 15, the method includes the following steps.

1501: An intelligent driving apparatus determines that a current driving scenario is an active exploration scenario.

For example, when determining, based on a detection field of view and map information, that the current driving scenario is an intersection, an opening, or a gap between vehicles at which "sudden intrusion" may occur, the intelligent driving apparatus determines that the current driving scenario is an active exploration scenario. Step 1501 may be replaced with the following: An intelligent driving apparatus determines that a current driving scenario is an intersection, an opening, or a gap between vehicles at which "sudden intrusion" may occur.

1502: The intelligent driving apparatus determines whether the detection field of view satisfies a requirement of a first driving decision.

The first driving decision is a driving decision for traveling in a current traveling lane that is currently executed by the intelligent driving apparatus. Determining whether the detection field of view satisfies the requirement of the first driving decision is specifically determining whether a proportion of a blocked lateral field of view of the intelligent driving apparatus exceeds a third threshold.

1503: When the detection field of view does not satisfy the requirement of the first driving decision, the intelligent driving apparatus determines a second driving decision.

The second driving decision is a driving decision for a lane change, lane borrowing, a lateral offset, or a driving speed reduction. That the intelligent driving apparatus determines the second driving decision is specifically as follows: The intelligent driving apparatus incorporates a sensed H-FOV into a target function to perform lane-level decision-making, to obtain the to-be-executed second driving decision. If a condition permits, the intelligent driving apparatus may horizontally move away from a risk region through the lane change or lane borrowing. The risk region may be a region with a potential risk that is inferred by the intelligent driving apparatus based on the detection field of view. When incorporating the sensed H-FOV into the target function to perform lane-level decision-making, the intelligent driving apparatus evaluates, under constraint of a traffic rule, a benefit brought by the lane change or lane borrowing. When the driving decision for the lane change or lane borrowing is insufficient to expand the H-FOV to a specific size (for example, reduce a proportion of a blocked region in an ROI to be less than 40%, 35%, or 30%), a risk factor is increased, and it is determined to execute the second driving decision to reduce a speed of the intelligent driving apparatus. When the driving decision for the lane change or lane borrowing is sufficient to expand the H-FOV to a specific size, it is determined to execute the second driving decision to expand the detection field of view. FIG. 16 is a diagram of lateral avoidance to reduce field of view blocking according to an embodiment of this application. As shown in FIG. 16, an H-FOV of the intelligent driving apparatus when the intelligent driving apparatus travels on an intermediate lane is $\alpha 1$; and if the intelligent driving apparatus changes to travel on a left lane, the H-FOV of the intelligent driving apparatus is $\alpha 2$, where $\alpha 2$ is greater than $\alpha 1$. It can be learned from FIG. 16 that the intelligent driving apparatus may reduce field of view blocking through lateral avoidance.

The target function may be obtained by weighting a plurality of targets. One of the targets is a field of view target function. The target function can be generated by quantizing a size of a blocked region and incorporating the size into an equation. An example of the target function is as follows:

CLaneChange=wsafe*Csafe+wefficiency*Cefficiency+wconsist*Cconsist+wview*C view.

CLaneChange represents a lane change cost, Csafe represents lane change safety, Cefficiency represents lane change efficiency, Cconsist represents lane change consistency, Cview represents a field of view cost of a lane change, and wsafe, wefficiency, wconsist, and wview represent respective weights. When the lane change cost is less than a specific threshold, a lane change decision is executed. However, in a process of calculating the field of view cost, a larger sensed H-FOV indicates a smaller field of view cost and a higher tendency to perform the lane change.

Before the intelligent driving apparatus executes the driving decision for the lane change or lane borrowing, a driver needs to perform confirmation. Without confirmation, the intelligent driving apparatus can perform only in-lane decision-making. For example, when the second driving decision is the lane change or lane borrowing, a pop-up window on a central display or AI voice is used to inform the driver whether to accept an active avoidance function, that is, whether to agree to execute the driving decision for the lane change or lane borrowing. When the second driving decision is to decelerate in a vertical direction or slightly deviate in a horizontal direction (a lane line is not exceeded when the lane is clear, and a lateral offset does not exceed a specific threshold when the lane is unclear), the driver is directly informed through AI voice.

1504: The intelligent driving apparatus executes the second driving decision.

1505: When the detection field of view satisfies the requirement of the first driving decision, the intelligent driving apparatus executes the first driving decision.

In embodiments of this application, when encountering a "sudden intrusion" scenario, the intelligent driving apparatus analyzes a blocking degree of the H-FOV and the risk region, and determines, based on the information, whether a possible risk can be avoided through active horizontal avoidance or vertical deceleration.

The foregoing describes the intelligent driving method and the architecture of the active exploration system provided in embodiments of this application. FIG. 3 may be considered as a diagram of a structure of an intelligent driving apparatus.

FIG. 3 is reused. FIG. 3 is a diagram of a structure of an intelligent driving apparatus according to an embodiment of this application. The intelligent driving apparatus may implement functions or steps implemented by the intelligent driving apparatus in the foregoing method embodiments. The intelligent driving apparatus may include a driving scenario analysis module, a field of view blocking detection module, and an active exploration decision-making module. Optionally, the intelligent driving apparatus may further include a storage unit. The storage unit may be configured to store instructions (code or a program) and/or data. The driving scenario analysis module, the field of view blocking detection module, and the active exploration decision-making module may all be coupled to the storage unit. For example, the active exploration decision-making module may read the instructions (the code or the program) and/or the data in the storage unit, to implement a corresponding method. The foregoing modules may be disposed independently, or may be partially or completely integrated. For example, the driving scenario analysis module, the field of view blocking detection module, and the active exploration decision-making module correspond to a same entity, for example, an MDC or a processor that runs an intelligent driving system.

In a possible implementation, the field of view blocking detection module is configured to determine a detection field of view. The active exploration decision-making module is configured to determine whether the detection field of view satisfies a requirement of a first driving decision, where the first driving decision is a driving decision that the intelligent driving apparatus or a driver expects to execute, or the first driving decision is a driving decision currently executed by the intelligent driving apparatus. The active exploration decision-making module is further configured to: when the detection field of view does not satisfy the requirement of the first driving decision, control the intelligent driving apparatus to execute a second driving decision to expand the detection field of view, or control the intelligent driving apparatus to execute a second driving decision to reduce a speed of the intelligent driving apparatus.

In a possible implementation, the active exploration decision-making module is further configured to determine that the intelligent driving apparatus satisfies a lateral offset condition in a current traveling scenario.

In a possible implementation, the active exploration decision-making module is further configured to determine that the intelligent driving apparatus currently satisfies a lane change condition, a lane borrowing condition, or a lateral offset condition.

In a possible implementation, the active exploration decision-making module is further configured to output first prompt information, where the first prompt information is used to inform the driver whether to agree to execute a driving decision for the lane change, lane borrowing, or lateral offset.

In a possible implementation, the active exploration decision-making module is further configured to output second prompt information, where the second prompt information is used to inform the driver that the intelligent driving apparatus is to be controlled to decelerate.

In a possible implementation, the active exploration decision-making module is further configured to output a function enabling request, where the function enabling request is used to request to enable a function of controlling the intelligent driving apparatus to execute the second driving decision.

In a possible implementation, the active exploration decision-making module is further configured to output exploration process information to a display apparatus, where the exploration process information is used by the display apparatus to display a process of expanding the detection field of view.

In a possible implementation, the active exploration decision-making module is further configured to output field of view blocking information to the display apparatus, where the field of view blocking information is used by the display apparatus to display a position and a blocking proportion of a field of view blocking region of the intelligent driving apparatus.

In a possible implementation, the active exploration decision-making module is further configured to: when the detection field of view satisfies the requirement of the first driving decision, control the intelligent driving apparatus to execute the first driving decision.

In a possible implementation, the active exploration decision-making module is further configured to: when the requirement of the first driving decision is satisfied after the detection field of view is expanded, control the intelligent driving apparatus to execute the first driving decision.

In a possible implementation, the active exploration decision-making module is further configured to: when the requirement of the first driving decision is not satisfied after the detection field of view is expanded, control the intelligent driving apparatus to execute a third driving decision to offset toward a center of the current traveling lane.

In a possible implementation, the driving scenario analysis module is configured to determine that a current driving scenario of the intelligent driving apparatus is an active exploration scenario.

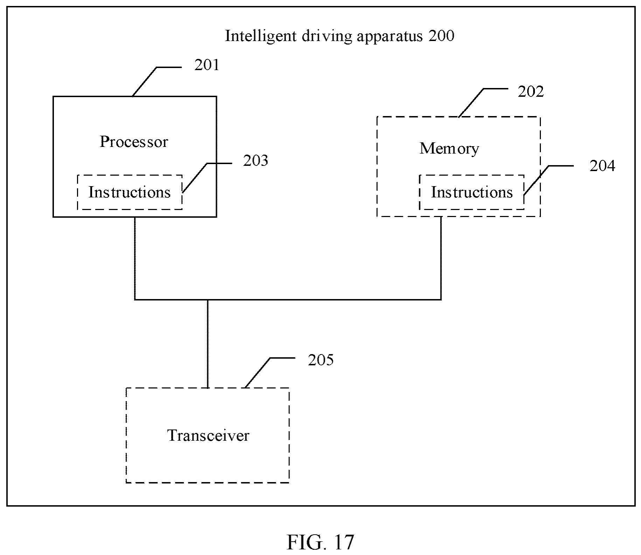

FIG. 17 is a diagram of a structure of another intelligent driving apparatus 200 according to an embodiment of this application. The intelligent driving apparatus 200 corresponds to the intelligent driving apparatus in the foregoing method embodiments, and may be a chip, a chip system, a processor, or the like, or may be a vehicle-mounted device. The intelligent driving apparatus 200 may be configured to implement the methods described in the foregoing method embodiments. For details, refer to the descriptions in the foregoing method embodiments.

Refer to FIG. 17. The intelligent driving apparatus 200 may include one or more processors 201. The processor 201 may be a general-purpose processor, a dedicated processor, or the like. The intelligent driving apparatus 200 may further include a transceiver 205. The transceiver 205 may be referred to as a transceiver unit, a transceiver machine, a transceiver circuit, or the like, and is configured to implement a transceiver function. The transceiver 205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the intelligent driving apparatus 200 may include one or more memories 202. The memory 202 may store instructions 204. The instructions 204 may be a computer program. The computer program may be run on the intelligent driving apparatus 200, so that the intelligent driving apparatus 200 performs the methods described in the foregoing method embodiments. Optionally, the memory 202 may further store data. The intelligent driving apparatus 200 and the memory 202 may be separately disposed, or may be integrated.

For another example, the intelligent driving apparatus 200 may be:

(1) an independent integrated circuit IC, a chip, a chip system, or subsystem;
(2) a module that may be embedded in another device; and
(3) a mobile unit, a vehicle-mounted device, a cloud device, an artificial intelligence device, or the like.

In a possible implementation, the processor 201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In an implementation, the processor 201 may store instructions 203. The instructions may be a computer program. The instructions 203 are run on the processor 201, so that the intelligent driving apparatus 200 performs the methods described in the foregoing method embodiments. The instructions 203 may be solidified in the processor 201. In this case, the processor 201 may be implemented by hardware.

In an implementation, the intelligent driving apparatus 200 may include a circuit. The circuit may implement the sending, receiving, or communication function in the foregoing method embodiments. The processor and the transceiver described in embodiments of this application may be implemented on an integrated circuit (IC), an analog IC, a radio frequency integrated circuit (RFIC), a mixed-signal IC, an application-specific integrated circuit (ASIC), a printed circuit board (PCB), an electronic device, or the like.

This application further provides a computer-readable storage medium. The computer-readable storage medium stores a computer program or instructions. When the computer program or the instructions are run on a computer, the computer is enabled to perform the method in the foregoing embodiment. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like. The computer may be a general-purpose computer, a dedicated computer, a computer network, or another programmable apparatus.

It should be noted that a person of ordinary skill in the art may learn that all or a part of the steps of the methods in the foregoing embodiments may be implemented by a program instructing related hardware. The program may be stored in the computer-readable storage medium. The computer-readable storage medium includes a read-only memory (ROM), a random access memory (RAM), a programmable read-only memory (PROM), an erasable programmable read-only memory (EPROM), a one-time programmable read-only memory (OTPROM), an electrically-erasable programmable read-only memory (EEPROM), a compact disc read-only memory (CD-ROM) or another optical disc memory, a magnetic disk memory, a magnetic tape memory, or any other computer-readable medium capable of carrying or storing data.

This application further provides a computer program product. The computer program product includes instructions or a computer program. When the instructions or the computer program is run on a computer, the method in the foregoing embodiments is performed. The computer program product includes one or more computer instructions. When the computer program instructions are loaded and executed on the computer, all or a part of the foregoing procedures or functions in embodiments of this application are generated.

All or a part of the foregoing embodiments may be implemented by using software, hardware, firmware, or any combination thereof. When software is used to implement the embodiments, all or a part of the embodiments may be implemented in a form of a computer program product.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to optional embodiments, and the involved actions and modules are not necessarily required in this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual connections or couplings or communication connections may be implemented through interfaces. The indirect connections or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The technical solutions of this application essentially, a part contributing to the conventional technology, or all or a part of the technical solutions may be implemented in a form of a software product. The computer program product is stored in a storage medium, and includes several instructions for instructing a device (which may be a terminal device, a network device, a vehicle-mounted device, a router, a server, a robot, a chip, or the like) to perform all or a part of the steps of the methods described in embodiments of this application.

**Claims**

1. An intelligent driving method, applied to an intelligent driving apparatus, and comprising:

   determining a detection field of view;
   determining whether the detection field of view satisfies a requirement of a first driving decision, wherein the first driving decision is a driving decision that the intelligent driving apparatus or a driver expects to execute, or the first driving decision is a driving decision currently executed by the intelligent driving apparatus; and
   when the detection field of view does not satisfy the requirement of the first driving decision, controlling the intelligent driving apparatus to execute a second driving decision to expand the detection field of view, or controlling the intelligent driving apparatus to execute a second driving decision to reduce a speed of the intelligent driving apparatus.

2. The method according to claim 1, wherein when the first driving decision is a lane change, lane borrowing, or overtaking that the intelligent driving apparatus or the driver expects to execute, the second driving decision is a lateral offset.

3. The method according to claim 2, wherein that the detection field of view does not satisfy the requirement of the first driving decision is specifically as follows:
   a proportion of a blocked field of view for a target lane exceeds a first threshold, wherein the target lane is a lane to which the intelligent driving apparatus needs to change or a lane that the intelligent driving apparatus needs to borrow when the intelligent driving apparatus executes the first driving decision.

4. The method according to claim 1, wherein when the first driving decision is a driving decision for passing a front intersection that the intelligent driving apparatus or the driver expects to execute, the second driving decision is a lateral offset.

5. The method according to claim 4, wherein that the detection field of view does not satisfy the requirement of the first driving decision is specifically as follows:
   a field of view for a traffic light at the front intersection is blocked or a proportion of a blocked forward field of view of the intelligent driving apparatus exceeds a second threshold.

6. The method according to any one of claims 1 to 5, wherein before controlling the intelligent driving apparatus to execute the second driving decision to expand the detection field of view, the method further comprises:
   determining that the intelligent driving apparatus satisfies a lateral offset condition in a current driving scenario.

7. The method according to claim 1, wherein when the first driving decision is a driving decision for traveling in a current traveling lane that is currently executed by the intelligent driving apparatus, the second driving decision is a lane change, lane borrowing, or a lateral offset.

8. The method according to any one of claim 7, wherein before controlling the intelligent driving apparatus to execute the second driving decision to expand the detection field of view, the method further comprises:
   determining that the intelligent driving apparatus currently satisfies a lane change condition, a lane borrowing condition, or a lateral offset condition.

9. The method according to claim 7 or 8, wherein before controlling the intelligent driving apparatus to execute the second driving decision to expand the detection field of view, the method further comprises:
   outputting first prompt information, wherein the first prompt information is used to inform the driver whether to agree to execute a driving decision for the lane change, lane borrowing, or lateral offset.

10. The method according to claim 1, wherein when the first driving decision is a driving decision for traveling at a first speed in a current traveling lane that is currently executed by the intelligent driving apparatus, the second driving decision is a driving decision for traveling at a second speed in the current traveling lane, and the second speed is lower than the first speed.

11. The method according to any one of claims 7 to 10, wherein that the detection field of view does not satisfy the requirement of the first driving decision is specifically as follows:
a proportion of a blocked lateral field of view of the intelligent driving apparatus exceeds a third threshold.

12. The method according to claim 10 or 11, wherein before controlling the intelligent driving apparatus to execute the second driving decision to reduce the speed of the intelligent driving apparatus, the method further comprises:
outputting second prompt information, wherein the second prompt information is used to inform the driver that the intelligent driving apparatus is to be controlled to decelerate.

13. The method according to any one of claims 1 to 12, wherein before controlling the intelligent driving apparatus to execute the second driving decision, the method further comprises:
outputting a function enabling request, wherein the function enabling request is used to request to enable a function of controlling the intelligent driving apparatus to execute the second driving decision.

14. The method according to claim 13, wherein after controlling the intelligent driving apparatus to execute the second driving decision, the method further comprises:
outputting exploration process information to a display apparatus, wherein the exploration process information is used by the display apparatus to display a process of expanding the detection field of view.

15. The method according to claim 14, wherein the method further comprises:
outputting field of view blocking information to the display apparatus, wherein the field of view blocking information is used by the display apparatus to display a position and a blocking proportion of a field of view blocking region of the intelligent driving apparatus.

16. The method according to any one of claims 1 to 15, wherein the method further comprises:
when the detection field of view satisfies the requirement of the first driving decision, controlling the intelligent driving apparatus to execute the first driving decision.

17. The method according to any one of claims 1 to 15, wherein the method further comprises:
when the requirement of the first driving decision is satisfied after the detection field of view is expanded, controlling the intelligent driving apparatus to execute the first driving decision.

18. The method according to any one of claims 1 to 15, wherein the method further comprises:
when the requirement of the first driving decision is not satisfied after the detection field of view is expanded, controlling the intelligent driving apparatus to execute a third driving decision to offset toward a center of the current traveling lane.

19. An intelligent driving apparatus, comprising a module or unit configured to implement the method according to any one of claims 1 to 18.

20. A computer-readable storage medium, wherein the computer-readable storage medium stores a computer program, the computer program comprises program instructions, and when the program instructions are executed, a computer is enabled to perform the method according to any one of claims 1 to 18.

21. An intelligent driving apparatus, comprising a processor, wherein the processor is configured to: when executing instructions, enable the intelligent driving apparatus to perform the method according to any one of claims 1 to 18.

22. The apparatus according to claim 21, wherein the apparatus further comprises a memory, and the memory is configured to store the instructions.

23. A chip, wherein the chip comprises a processor and a communication interface, and the processor reads, through the communication interface, instructions stored in a memory, to perform the method according to any one of claims 1 to 18.

**24.** A computer program product, wherein when the computer program product runs on a computer, the computer is enabled to perform the method according to any one of claims 1 to 18.

101

| An active exploration system performs driving scenario analysis |

102

| When a current driving scenario of an intelligent driving apparatus is an active exploration scenario, the active exploration system analyzes a blocking status of a detection field of view of the intelligent driving apparatus, and transmits the blocking status of the detection field of view to a display apparatus to display a position and a blocking proportion of a field of view blocking region |

103

| After obtaining the blocking status of the detection field of view through analysis, the active exploration system performs active exploration decision-making and planning |

FIG. 1

| Blocking sensing |

| Routine decision-making |

| Exploration decision-making |

| Exploration sensing |

FIG. 2

| Driving scenario analysis module |
| Field of view blocking detection module |
| Active exploration decision-making module |
| Active exploration system |

FIG. 3

FIG. 4

Determine whether a detection field of view satisfies a requirement of a first driving decision

Yes → Execute the first driving decision

No ↓

Determine whether an intelligent driving apparatus can perform active exploration

No → Execute a conservative driving decision

Yes ↓

Determine a distance and an exploration occasion for active exploration, and control, based on an actual situation, the intelligent driving apparatus to execute a driving decision for expanding the detection field of view

FIG. 5

601

An intelligent driving apparatus determines a detection field of view

602

Determine whether the detection field of view satisfies a requirement of a first driving decision

Yes

No

603

Control the intelligent driving apparatus to execute a second driving decision to expand the detection field of view, or control the intelligent driving apparatus to execute a second driving decision to reduce a speed of the intelligent driving apparatus

604

When the requirement of the first driving decision is satisfied after the detection field of view is expanded, control the intelligent driving apparatus to execute the first driving decision

605

Control the intelligent driving apparatus to execute the first driving decision

FIG. 6

Blind spot

Field of view

FIG. 7

FIG. 8

The system recommends to **perform active exploration** to obtain more surrounding information

Accept          Reject

The system recommends to **actively avoid** a possible safety risk

Accept          Reject

FIG. 9

**Active exploration/avoidance function enabling settings:**

- Enabling is allowed in an intelligent driving mode: [ON]
- Enabling is allowed in a human driving mode: [ON]
- Disable the function [OFF]

**Human-machine interaction mode settings:**

- ⊙ After the system provides a notification, an operation is performed only after the driver confirms acceptance

- ○ After the system provides a notification, if the driver does not perform interaction within a period of time, acceptance is selected by default

**Advanced settings**

**Active exploration/avoidance function advanced settings:**

- Target lane horizontal deviation exploration: [ON]
- Traffic light horizontal deviation exploration: [ON]
- Active lane change avoidance in blind spot: [OFF]
- Active lane borrowing avoidance in blind spot: [OFF]
- Active deceleration avoidance in blind spot: [ON]
- Active degree of enabling the function: 1 ———○——— 9

(1~9, a larger number represents active, and a smaller number represents conservative)

FIG. 10

1101

An intelligent driving apparatus determines that a current driving scenario is an active exploration scenario

1102

Determine whether a detection field of view satisfies a requirement of a first driving decision

Yes

No

1103

Control the intelligent driving apparatus to execute a second driving decision to expand the detection field of view

1106

The intelligent driving apparatus performs active exploration rollback

No

1104

The intelligent driving apparatus determines whether a lane change condition is satisfied

Yes

1105

When the lane change condition is satisfied, the intelligent driving apparatus executes the first driving decision

1107

When the detection field of view satisfies the requirement of the first driving decision, the intelligent driving apparatus executes the first driving decision

FIG. 11

FIG. 12A

FIG. 12B

1301

An intelligent driving apparatus determines that a current driving scenario is an active exploration scenario

1302

Determine whether a detection field of view satisfies a requirement of a first driving decision

Yes

No

1303

Control the intelligent driving apparatus to execute a second driving decision to expand the detection field of view

1306

The intelligent driving apparatus performs active exploration rollback

No

1304

Determine whether a traffic light at a front intersection is detected

Yes

1305

Determine a manner of passing the front intersection

1307

When the detection field of view satisfies the requirement of the first driving decision, the intelligent driving apparatus executes the first driving decision

FIG. 13

6 m

BlockArea

3 m

1.5 m

20 m

10 m

15 m

FIG. 14

1501

An intelligent driving apparatus determines that a current driving scenario is an active exploration scenario

1502

Determine whether a detection field of view satisfies a requirement of a first driving decision

Yes

No

1503

The intelligent driving apparatus determines a second driving decision

Yes

1504

The intelligent driving apparatus executes the second driving decision

1505

The intelligent driving apparatus executes the first driving decision

FIG. 15

$\alpha_1$

$\alpha_2$

$\alpha_2 > \alpha_1$

FIG. 16

Intelligent driving apparatus 200

201

Processor

203

Instructions

202

Memory

204

Instructions

205

Transceiver

FIG. 17

## INTERNATIONAL SEARCH REPORT

| International application No. |
|---|
| **PCT/CN2024/079276** |

**A.    CLASSIFICATION OF SUBJECT MATTER**

B60W40/10(2012.01)i

According to International Patent Classification (IPC) or to both national classification and IPC

**B.    FIELDS SEARCHED**

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNTXT, WPABSC, VEN, DWPI, ENTXTC, CJFD: 视野, 视线, 盲区, 遮挡, 挡住, 阻挡, 换道, 借道, 超车, 横向, 减速, 降速, view, blind area, overtak+, shield+, block+, limit+, lateral, traverse, decelerat+, reduce speed

**C.    DOCUMENTS CONSIDERED TO BE RELEVANT**

| Category* | Citation of document, with indication, where appropriate, of the relevant passages | Relevant to claim No. |
|---|---|---|
| X | CN 111361560 A (BEIJING BAIDU NETCOM SCIENCE AND TECHNOLOGY CO., LTD.) 03 July 2020 (2020-07-03) description, pages 3-8, and figures 1-5 | 1-24 |
| X | CN 113348119 A (HUAWEI TECHNOLOGIES CO., LTD.) 03 September 2021 (2021-09-03) description, pages 3-8, and figures 1-5 | 1-24 |
| A | CN 112498365 A (BAIDU USA LLC.) 16 March 2021 (2021-03-16) entire document | 1-24 |
| A | CN 115214621 A (MERCEDES-BENZ GROUP AG) 21 October 2022 (2022-10-21) entire document | 1-24 |
| A | CN 111703371 A (BEIJING BAIDU NETCOM SCIENCE AND TECHNOLOGY CO., LTD.) 25 September 2020 (2020-09-25) entire document | 1-24 |
| A | JP 2008129718 A (TOYOTA CENTRAL R&D LABS., INC.) 05 June 2008 (2008-06-05) entire document | 1-24 |

☑ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **20 May 2024** | **31 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/079276** |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | DE 102016224332 A1 (AUDI AG) 07 June 2018 (2018-06-07)<br>      entire document | 1-24 |

Form PCT/ISA/210 (second sheet) (July 2022)

**INTERNATIONAL SEARCH REPORT**
**Information on patent family members**

International application No.

**PCT/CN2024/079276**

| Patent document cited in search report | | | Publication date (day/month/year) | Patent family member(s) | | | Publication date (day/month/year) |
|---|---|---|---|---|---|---|---|
| CN | 111361560 | A | 03 July 2020 | None | | | |
| CN | 113348119 | A | 03 September 2021 | WO | 2021196145 | A1 | 07 October 2021 |
| CN | 112498365 | A | 16 March 2021 | US | 2021139022 | A1 | 13 May 2021 |
| | | | | EP | 3819182 | A1 | 12 May 2021 |
| CN | 115214621 | A | 21 October 2022 | None | | | |
| CN | 111703371 | A | 25 September 2020 | None | | | |
| JP | 2008129718 | A | 05 June 2008 | None | | | |
| DE | 102016224332 | A1 | 07 June 2018 | None | | | |

Form PCT/ISA/210 (patent family annex) (July 2022)

**REFERENCES CITED IN THE DESCRIPTION**

**Patent documents cited in the description**

- CN 202310304552